# EUROPEAN PATENT APPLICATION

(11) **EP 3 422 348 A1**
(43) Date of publication of application: **02.01.2019**
(21) Application number: 17756163.6
(22) Date of filing: 06.02.2017
(51) Int. Cl.: G11B 20/10, G11B 20/12, H04N 5/91, H04N 5/93

(54) **INFORMATION PROCESSING APPARATUS, DISPLAY APPARATUS, INFORMATION RECORDING MEDIUM, INFORMATION PROCESSING METHOD, AND PROGRAM**

(30) Priority: 26.02.2016 JP 2016035129
(71) Applicant: Sony Corporation, Tokyo 108-0075 (JP)
(72) Inventor: UCHIMURA, Kouichi, Tokyo 108-0075 (JP); HAMADA, Toshiya, Tokyo 108-0075 (JP)
(74) Representative: Witte, Weller & Partner Patentanwälte mbB
(86) International application number: PCT/JP2017/004180
(87) International publication number: WO 2017/145722

(57) **Abstract**

According to the type of an image stored in an information recording medium and display function information of a display device, an displayable image is acquired from the recording medium and output to the display device. A data processing unit configured to reproduce data from an information recording medium inputs display function information for each of the HDR 1, HDR 2, and SDR images from a display device configured to display reproduction data, acquires HDR identification information indicating whether image data recorded in the information recording medium includes each of the HDR 1, HDR 2, and SDR images from a database file recorded in the information recording medium, and reads image data displayable on the display device from the information recording medium on the basis of results of comparison between the acquired display device function information and the HDR identification information, and outputs the same to the display device.

## Description

### TECHNICAL FIELD

The present disclosure relates to an information processing device, a display device, an information recording medium, an information processing method, and a program. More specifically, the present disclosure relates to an information processing device that performs control for displaying high dynamic range (HDR) images, a display device, an information recording medium, an information processing method, and a program.

### BACKGROUND ART

At present, a broadcasting standard setting body, International Telecommunication Union-Radio communications sector (ITU-R) is proceeding into the development of standards for high dynamic range (HDR) images that are images and the like extended in color gamut and contrast ratio (dynamic range) in the case of output to displays such as TVs.

As compared to widely used standard dynamic range (SDR) images, HDR has a large gamut and allows a high level of contrast, thereby achieving image representation closer to reality seen by the naked eye.

At present, at least two types of HDR image output schemes are expected to be standardized.

Specifically, the following two schemes are planned for standardization:
(a) Application 1
(b) Application 2
   (a) Application 1 is an HDR scheme under which SMPTE 2084 curve defined by Society of Motion Picture and Television Engineers, Inc. (SMPTE) is used for signal transfer functions (optical-electro transfer function/electro-optical transfer function).

On the other hand, (b) Application 2 is an HDR scheme under which Hybrid Log-Gamma (HLG) curve formed by combining a gamma curve and a log curve is used for signal transfer functions (optical-electro transfer function/electro-optical transfer function).

In addition, information recording media usable as storage media for SDR images and HDR images include a Blu-ray (registered trademark) disc (BD), for example.

As Blu-ray (registered trademark) disc (BD) standard setting body, Blu-ray (registered trademark) Disc Association (BDA) has already developed standards for recording and reproducing ultra high definition (UHD) images that are equivalent to HDR images.

It should be noted that, for example, Patent Document 1 (Japanese Patent Application Laid-Open No. 2011-023071) and the like describes recording and reproducing ultra high definition image data using BD.

The already developed BD standards include the standards for (a) Application 1 out of the foregoing two HDR schemes.

However, there is a possibility that the standardization of (b) Application2 will be studied in the future.

An Application 1-type image and an Application 2-type image are different in signal processing to be performed in a display device such as a TV. Therefore, in order to connect a BD player for reproducing HDR images recorded in a BD to a TV to display BD reproduction data on the TV, for example, the TV needs to recognize in advance whether the reproduction data is of Application 1 type or Application 2 type.

In addition, the BD player also needs to recognize in advance which of HDR types is reproduceable on the connected TV and output image data displayable on the TV.

However, there is currently no method or rule for a BD player and a display device such as a TV to grasp such information.

Therefore, even though a BD player and a TV are connected, reproduction data from the BD may not be normally displayed on the TV.

### CITATION LIST

### PATENT DOCUMENTS

Patent Document 1: Japanese Patent Application Laid-Open No. 2011-023071

### SUMMARY OF THE INVENTION

### PROBLEMS TO BE SOLVED BY THE INVENTION

The present disclosure is devised in light of the foregoing problems, for example. An object of the present disclosure is to provide a reproduction device that reproduces data from an information recording medium such as a BD, an information processing device that acquires information necessary for normal reproduction and display of an HDR image together with a display device that displays the reproduction data and implements normal reproduction and display of the image, an display device, an information recording medium, an information processing method, and a program.

### SOLUTIONS TO PROBLEMS

A first aspect of the present disclosure is in an information processing device including
a data processing unit configured to reproduce data recorded in an information recording medium, in which
the data processing unit inputs display device information including high dynamic range (HDR) image display function information from a display device configured to display reproduction data from the information recording medium,
the data processing unit acquires HDR identification information indicating whether image data recorded in the information recording medium includes an HDR image from a database file recorded in the information recording medium, and
the data processing unit reads image data displayable on the display device from the information recording medium on the basis of results of comparison between the display device information and the HDR identification information, and outputs the image data to the display device.

In addition, a second aspect of the present disclosure is in an information processing device including
a data processing unit configured to record data into an information recording medium, in which
the data processing unit generates a database file that stores HDR identification information indicating which of HDR images different in image type, among a high dynamic range (HDR) 1 image, an HDR 2 image, and a standard dynamic range (SDR) image is included as the image data recorded in the information recording medium, and records the database file in the information recording medium.

In addition, a third aspect of the present disclosure is in an information recording medium including as record data:
a reproduction data file storing image data; and
a database file that stores HDR identification information indicating which of HDR images different in image type, among a high dynamic range (HDR) 1 image, an HDR 2 image, and a standard dynamic range (SDR) image is included as the image data stored in the reproduction data file, in which
a reproduction device is allowed to refer to the HDR identification information to select and reproduce the image data of the type suited to a display function of a display device configured to display reproduction data.

In addition, a fourth aspect of the present disclosure is in a display device including:
a communication unit configured to transmit and receive data to and from a reproduction device configured to reproduce data recorded in an information recording medium; and
a data processing unit, in which
the data processing unit generates display device information including high dynamic range (HDR) image display function information, and outputs the display device information to the reproduction device.

In addition, a fifth aspect of the present disclosure is in an information processing method executed in an information processing device, in which
the information processing device includes a data processing unit configured to reproduce data recorded in an information recording medium,
the data processing unit inputs display device information including high dynamic range (HDR) image display function information from a display device configured to display reproduction data from the information recording medium,
the data processing unit acquires HDR identification information indicating whether image data recorded in the information recording medium includes an HDR image from a database file recorded in the information recording medium, and
the data processing unit reads image data displayable on the display device from the information recording medium on the basis of results of comparison between the display device information and the HDR identification information, and outputs the image data to the display device.

In addition, a sixth aspect of the present disclosure is in an information processing method executed in an information processing device, in which
the information processing device includes a data processing unit configured to record data into an information recording medium, and
the data processing unit generates a database file that stores HDR identification information indicating which of HDR images different in image type, among a high dynamic range (HDR) 1 image, an HDR 2 image, and a standard dynamic range (SDR) image is included as the image data recorded in the information recording medium, and records the database file in the information recording medium.

In addition, a seventh aspect of the present disclosure is in an information processing method executed in a display device, in which
the display device includes:
a communication unit configured to transmit and receive data to and from a reproduction device configured to reproduce data recorded in an information recording medium; and
a data processing unit, and
the data processing unit generates display device information including high dynamic range (HDR) image display function information, and outputs the display device information to the reproduction device.

In addition, an eighth aspect of the present disclosure is in a program for causing an information processing device to perform information processing, in which
the information processing device includes a data processing unit configured to reproduce data recorded in an information recording medium, and
the program causes the data processing unit to perform:
inputting display device information including high dynamic range (HDR) image display function information from a display device configured to display reproduction data from the information recording medium;
acquiring HDR identification information indicating whether image data recorded in the information recording medium includes an HDR image from a database file recorded in the information recording medium; and
reading image data displayable on the display device from the information recording medium on the basis of results of comparison between the display device information and the HDR identification information, and outputting the image data to the display device.

In addition, a ninth aspect of the present disclosure is in a program for causing an information processing device to perform information processing, in which
the information processing device includes a data processing unit configured to record data into an information recording medium, and
the program causes the data processing unit to generate a database file that stores HDR identification information indicating which of HDR images different in image type, among a high dynamic range (HDR) 1 image, an HDR 2 image, and a standard dynamic range (SDR) image is included as the image data recorded in the information recording medium, and record the database file in the information recording medium.

In addition, a tenth aspect of the present disclosure is in a program for causing a display device to perform information processing, in which
the display device includes:
a communication unit configured to transmit and receive data to and from a reproduction device configured to reproduce data recorded in an information recording medium; and
a data processing unit, and
the program causes the data processing unit to generate display device information including high dynamic range (HDR) image display function information, and output the display device information to the reproduction device.

Note that the program of the present disclosure is a program capable of being provided by a computer-readable storage medium or communication medium to an information processing device or a computer system capable of executing various program codes, for example. Providing the program in a computer-readable manner makes it possible to implement processing according to the program on the information processing device or the computer system.

Still other objects, features, and advantages of the present disclosure will be clarified by more detailed descriptions based on examples of the present disclosure described later and the attached drawings. For reference, the system herein refers to a logical aggregate configuration of a plurality of devices, and the individually configured devices may not be in the same housing.

### EFFECTS OF THE INVENTION

According to a configuration of an embodiment of the present disclosure, it is possible to acquire displayable images from a recording medium according to the type of the image stored in the information recording medium and display function information regarding the display device, and output the image to the display device.

Specifically, the data processing unit configured to reproduce data from the information recording medium inputs the display function information for each of the HDR 1, HDR 2, and SDR images from the display device configured to perform the reproduction data display process, acquires the HDR identification information indicating whether the image data recorded in the information recording medium includes each of the HDR 1, HDR 2, and SDR images from the database file recorded in the information recording medium, and reads image data displayable on the display device from the information recording medium on the basis of results of comparison between the acquired display device function information and HDR identification information, and outputs the same to the display device.

According to this configuration, it is possible to acquire the displayable image from the recording medium according to the type of the image stored in the information recording medium and the display function information regarding the display device, and outputs the same to the display device.

Note that the advantageous effects described herein are mere examples but are not limited ones. The present disclosure may have any additional advantageous effects.

### BRIEF DESCRIPTION OF DRAWINGS

Fig. 1 is a diagram describing a plurality of image types.
Fig. 2 is a diagram describing combinations of an information recording medium, a reproduction device, and display devices.
Fig. 3 is a diagram describing an example of directory configuration of data recorded in a medium in a BDMV format.
Fig. 4 is a diagram describing correspondence between playlists prescribed in the BDMV format and reproduction data.
Fig. 5 is a diagram describing stored files and stored data in HDR identification information.
Fig. 6 is a diagram describing a data configuration in an index file.
Fig. 7 is a diagram describing identifiers for extended data stored in an extended data record area of the index file.
Fig. 8 is a diagram describing a data configuration in the extended data record area of the index file.
Fig. 9 is a diagram describing an example of HDR identification information recorded in the extended data record area of the index file.
Fig. 10 is a diagram describing a data configuration of a playlist file.
Fig. 11 is a diagram describing a data configuration in an extended data record area of the playlist file.
Fig. 12 is a diagram describing an example of HDR identification information recorded in the extended data record area of the playlist file.
Fig. 13 is a diagram describing an example of HDR identification information recorded in the extended data record area of the playlist file.
Fig. 14 is a diagram describing an example of HDR identification information recorded in the extended data record area of the playlist file.
Fig. 15 is a diagram describing an example of HDR identification information recorded in the extended data record area of the playlist file.
Fig. 16 is a diagram describing an example of HDR identification information recorded in the extended data record area of the playlist file.
Fig. 17 is a diagram describing a data configuration in an extended data record area of a clip information file.
Fig. 18 is a diagram describing an example of HDR identification information recorded in the extended data record area of the clip information file.
Fig. 19 is a diagram describing an example of HDR identification information recorded in the extended data record area of the clip information file.
Fig. 20 is a diagram describing data transferred between the reproduction device and the display device.
Fig. 21 is a diagram describing a specific example of display device function information (EDID) transmitted from the display device to the reproduction device.
Fig. 22 is a diagram describing a specific example of display device function information (EDID) transmitted from the display device to the reproduction device.
Fig. 23 is a diagram describing an example of recording of the display device function information (EDID) into a storage unit (PSR) in the reproduction device.
Fig. 24 is a diagram describing a data configuration in an info frame as reproduction data information transmitted from the reproduction device to the display device.
Fig. 25 is a diagram describing playlist recording information stored in the info frame as reproduction data information transmitted from the reproduction device to the display device.
Fig. 26 is a diagram describing a configuration of an information processing device that records data into the information recording medium.
Fig. 27 is a flowchart of a process sequence executed by the information processing device that records data into the information recording medium.
Fig. 28 is a diagram describing a configuration of the information processing device that reproduces data from the information recording medium.
Fig. 29 is a flowchart of a process sequence executed by the information processing device that reproduces data from the information recording medium.
Fig. 30 is a diagram describing an example of hardware configuration of a notification processing device applied to the processing in the present disclosure.

### MODE FOR CARRYING OUT THE INVENTION

An information processing device, a display device, an information recording medium, an information processing method, and a program of the present disclosure will be described in detail with reference to the drawings. Note that the descriptions will be given in the order of the items listed below.
1. Signaling system of HDR image and configuration for reproduction process of HDR image
2. Example of configuration for recording identification information of image data recorded in an information recording medium
   2-1. Overview of recorded data in an information recording medium
   2-2. Example of recording HDR identification information in an index file
   2-3. Example of recording HDR identification information in a playlist file
   2-4. Example of recording HDR identification information in a clip information file
3. Example of information input/output configuration between a reproduction device and a display device
   3-1. Display device information transmitted by the display device to the reproduction device
   3-2. Reproduction data information transmitted by the reproduction device to the display device
4. Configuration and processing of an information processing device that records data into an information recording medium
5. Configuration and processing of an information processing device that reproduces data from an information recording medium
6. Example of configuration of an information processing device
7. Summary of configuration of the present disclosure

### [1. Signaling system of HDR image and configuration for reproduction process of HDR image]

First, the signaling system of HDR image and the configuration for reproduction process of HDR image will be described.

As described above, at present, a broadcasting standard setting body, International Telecommunication Union-Radio communications sector (ITU-R) is proceeding into the development of standards for high dynamic range (HDR) images that are images and the like extended in color gamut and contrast ratio (dynamic range) in the case of output to displays such as TVs.

As compared to widely used standard dynamic range (SDR) images, HDR has a large gamut and allows a high level of contrast, thereby achieving image representation closer to reality seen by the naked eye.

To capture, transmit, and output an HDR image, an optical signal equivalent to the captured image is converted into an electric signal and the electric signal is transmitted from an image-capturing device or a broadcast station, and the electric signal is converted into the optical signal and the optical signal is output from a display device such as a TV.

Used as signal transfer functions necessary for the foregoing processing are an optical-electro transfer function (OETF) for converting an optical signal into an electric signal and an electro-optical transfer function (EOTF) for converting an electric signal to an optical signal.

The mode of the image to be output to the display unit of a TV or the like is decided depending on what signal transfer function to be used such as the optical-electro transfer function (OETF) or the electro-optical transfer function (EOTF).

The broadcast standard setting organization ITU-R is planning to standardize a plurality of different schemes using different signal transfer functions (OETF/EOTF) applied to transmission and output of HDR images.

Specifically, the following two schemes are planned for standardization:
(a) Application 1
(b) Application 2
   (a) Application 1 is an HDR scheme under which SMPTE 2084 curve defined by Society of Motion Picture and Television Engineers, Inc. (SMPTE) is used for signal transfer functions.

On the other hand, (b) Application 2 is an HDR scheme under which Hybrid Log-Gamma (HLG) curve formed by combining a gamma curve and a log curve is used for signal transfer functions.
(a) Application 1 is an absolute value scheme under which an absolute value of luminance in an image-capturing environment, 10000 cd/m² at maximum, can be expressed in the display unit.

On the other hand, (b) Application 2 is an relative value scheme under which an image can be displayed at a relative luminance level, 12 times higher than predetermined reference white, for example, according to the display characteristics of the display unit.

For reference, HDR images in conformity with (b) Application 2 as relative value scheme are characteristically capable of being output within respective displayable luminance ranges of both HDR TVs and SDR TVs.

That is, HDR TVs with high upper limits of output luminance compatible with HDR image output can output HDR images with wide dynamic ranges.

In addition, conventional SDR TVs with low upper limits of output luminance can also display HDR images as pseudo SDR images within luminance ranges that can be output by the SDR TVs.

On the other hand, according to (a) Application 1 as absolute value scheme, HDR TVs with high upper limits of output luminance compatible with HDR image output can output HDR images with wide dynamic ranges but conventional SDR TV with low upper limits of output luminance cannot display HDR images naturally.

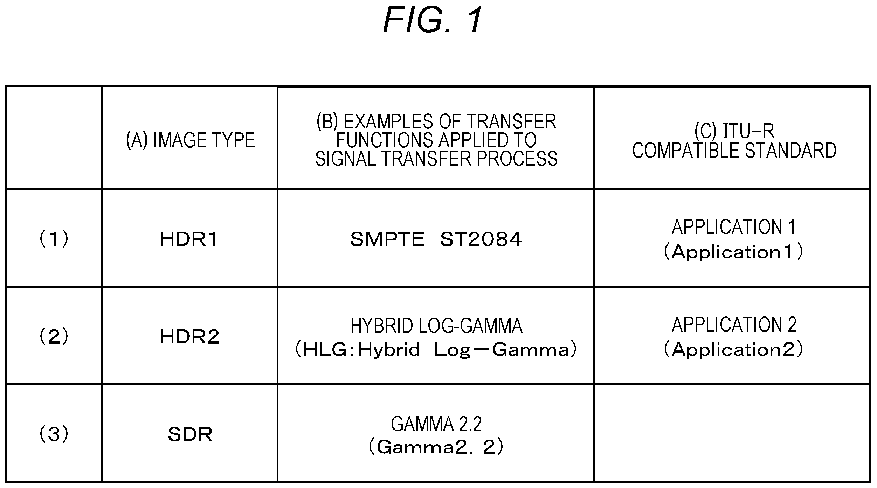

Fig. 1 is a diagram describing examples of images that may become displayable on display devices such as TVs.

As described in Fig. 1, there are three types of images that may become displayable on display devices such as TVs in the future as follows:
(1) HDR1
(2) HDR2
(3) SDR
   (1) The image type HDR1 corresponds to Application 1 under the ITU-R standards described above, and the transfer functions applied to signal transfer (OETF/EOTF) are defined by SMPTE ST2084 curve, for example.
   (2) The image type HDR2 corresponds to Application 2 under the ITU-R standards described above, and the transfer functions applied to signal transfer (OETF/EOTF) are defined by Hybrid Log-Gamma (HLG) curve, for example.
      Note that HDR2 images can be displayed in wide dynamic ranges on HDR TVs with a function of displaying HDR2 images as described above. HDR2 image can also be displayed as pseudo SDR images on SDR TVs without a function of displaying HDR2 images.
   (3) The image type SDR corresponds to conventional image data narrower in dynamic range than HDR images, and the transfer functions applied to signal transfer (OETF/EOTF) are defined by Gamma 2.2 curve, for example.

For example, for a display device such as a TV to generate a display image on the basis of an input image, the display device needs to determine which signal type illustrated in Fig. 1 corresponds to the input signal and perform signal processing according to the determined signal.

The three image types described in Fig. 1 are different from one another in signal processing necessary for generation of an output image. The display device thus cannot provide normal image display without performing signal processing according to each type.

In addition, information recording media usable as storage media for SDR images and HDR images include a Blu-ray (registered trademark) disc (BD), for example.

As Blu-ray (registered trademark) disc (BD) standard setting body, Blu-ray (registered trademark) Disc Association (BDA) has already developed standards for recording and reproducing ultra high definition (UHD) images such as HDR images.

The already developed BD standards include the standards for (a) HDR1 Application 1 out of the foregoing two HDR schemes.

However, there is a possibility that the standardization of (b) HDR2 Application2 will be studied in the future.

As described above, the HDR1 (Application 1) type and the HDR2 (Application 2) type are different in signal processing to be executed on the display device such as a TV. Therefore, in order to connect a BD player for reproducing HDR images recorded in a BD to a TV to display BD reproduction data on the TV, for example, the TV needs to recognize in advance whether the data input from the BD player is of HDR1 (Application 1) type or HDR2 (Application 2) type.

In addition, the BD player also needs to recognize in advance which of HDR types is reproduceable on the connected TV and output image data displayable on the TV.

However, there is currently no method or rule for a BD player and a display device such as a TV to grasp such information.

Therefore, even though a BD player and a TV are connected, reproduction data from the BD may not be normally displayed on the TV.

As display devices such as TVs, it is assumed that there is a plurality of different display devices as listed below, for example.
(1) Display device capable of outputting only SDR images
(2) Display device capable of outputting only SDR images and HDR1 (Application 1) images
(3) Display device capable of outputting only SDR images and HDR2 (Application 2) images
(4) Display device capable of outputting all SDR images, HDR1 images, and HDR2 images

A BD reproduction device (BD player) with a Blu-ray (registered trademark) disc (BD) recording SDR images and HDR images may be connected to these various types of display devices, for example.

For example, in a case where the HDR1 (Application 1) image is recorded in the BD, only the display devices (2) and (4) can display the HDR1 image, out of the display devices (1) to (4).

For example, in a case where the display device of the (1) or (3) type is connected to the BD player (reproduction device), even though the BD player (reproduction device) outputs the HDR1 image to the display device, the display device cannot display the HDR image normally.

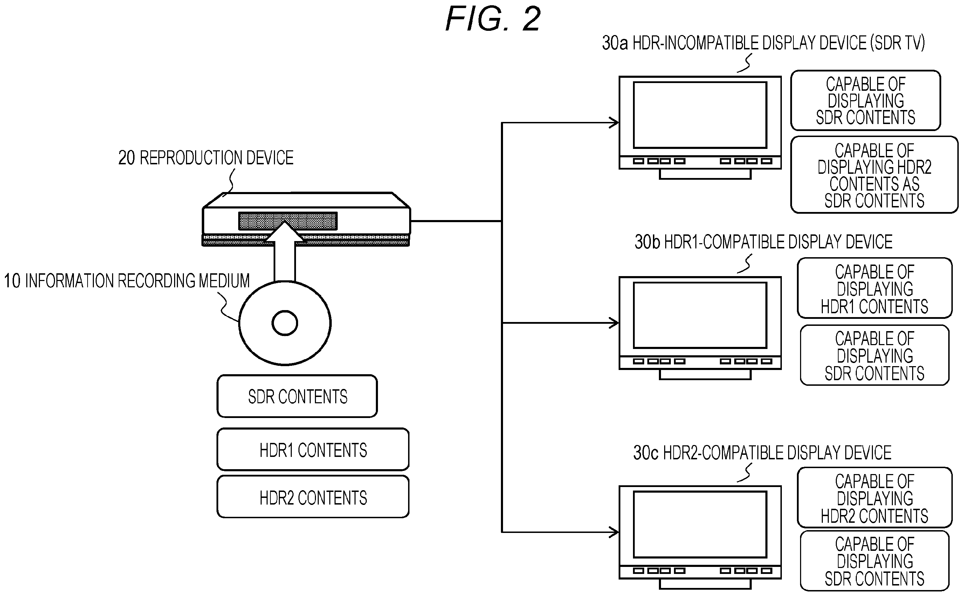

Fig. 2 illustrates examples of connection of an information recording medium 10, a reproduction device 20, and display devices 30a to 30c such as TVs.

The information recording medium 10 is a Blu-ray (registered trademark) disc (BD), for example, that stores any of the following types of image:
(1) SDR image contents
(2) HDR1 image contents
(3) HDR2 image contents

The display devices 30a to 30c connected to the reproduction device 20 are:
(1) HDR-incompatible TV (SDR TV) 30a
(2) HDR1-compatible TV 30b
(3) HDR2-compatible TV 30c

The display devices 30a to 30c are TVs with the foregoing functions.
(1) The HDR-incompatible TV (SDR TV) 30a can display SDR images. In addition, the HDR-incompatible TV can also display HDR2 images as pseudo SDR images.
   This is because HDR2 images are devised to be displayable as images hardly different from normal SDR images on an SDR TV with a narrow dynamic range as described above.
   HDR2 images correspond to the relative value scheme (b) Application 2 as described above. According to the HDR2 image scheme, HDR TVs compatible with HDR image output with high upper limits of output luminance can output HDR images with wide dynamic ranges, and conventional SDR TVs can also display HDR images naturally within luminance ranges that can be output by the SDR TVs.
   That is, HDR2 images can be displayed as HDR2 images on HDR2-compatible TVs and can also be displayed as SDR images on SDR TVs.
   However, HDR1 images cannot be displayed on SDR TVs.
(2) The HDR1-compatible TV 30b illustrated in Fig. 2 can display only HDR1 images and SDR images.
(3) The HDR2-compatible TV 30c can display only HDR2 images and SDR images.

According to these settings, in a case where the reproduction device 20 reproduces and outputs the HDR1 image recorded in the information recording medium 10 to the HDR2-compatible TV 30c, for example, the HDR2-compatible TV 30c recognizes wrongly the input signal from the reproduction device 20 as HDR2 image and executes signal processing for HDR2 image.

Specifically, the HDR2-compatible TV 30c executes signal transfer with application of Hybrid Log-Gamma (HLG) curve as an HDR-compatible signal transfer function described above with reference to Fig. 1 to generate a display image.

As a result, an unnatural image is displayed with incorrect output values of luminance and colors different from the luminance and colors of the original HDR1 image.

In the configuration illustrated in Fig. 2, for example, the processes necessary for reproducing image data recorded in the information recording medium 10 such as a Blu-ray (registered trademark) disc (BD) by the reproduction device (BD player) 20 and displaying normally the image by the display devices 30a to 30c are as follows:
(1) The reproduction device 20 ascertains the type of the image data recorded in the information recording medium (BD) 10, that is, which of the types HDR1, HDR2, and SDR of image is recorded in the information recording medium (BD) 10.
(2) The reproduction device 20 ascertains the type of the image data capable of being displayed by the display device connected to the reproduction device, that is, which of the types HDR1, HDR2, and SDR of image is capable of being displayed by the display device.
(3) The display devices 30a to 30c ascertain which of types HDR1, HDR2, and SDR of image data is to be input from the reproduction device 20.

Performing these ascertainment processes (1) to (3) before output of the image data from the reproduction device 20 to the display devices 30a to 30c allows normal reproduction and display according to the individual image types.

Note that in a case where it is found by the ascertainment processes (1) to (3) that the image type of the data stored in the BD 10 inserted in the reproduction device 20 does not coincide with the image type displayable by the display devices 30a to 30c connected to the reproduction device 20, the reproduction device 20 can output a message and the like to the display devices 30a to 30c that normal image display is impossible.

A specific example of configuration for implementing the ascertainment processes (1) to (3) will be described below.

### [2. Example of configuration for recording identification information of image data recorded in an information recording medium]

First, an example of configuration for recording identification information of image data recorded in an information recording medium will be described.

As described above with reference to Fig. 2, to implement normal image display on the display device 30, the reproduction device 20 needs to ascertain the type of the image data recorded in the inserted information recording medium (BD) 10, that is, which of the types HDR1, HDR2, and SDR of image is recorded in the inserted information recording medium (BD) 10.

Hereinafter, as a configuration for implementing the ascertain processes, an example of configuration for recording identification information of the image data in the information recording medium into the information recording medium.

### [2-1. Overview of recorded data in an information recording medium]

First, data recorded in an information recording medium will be outlined.

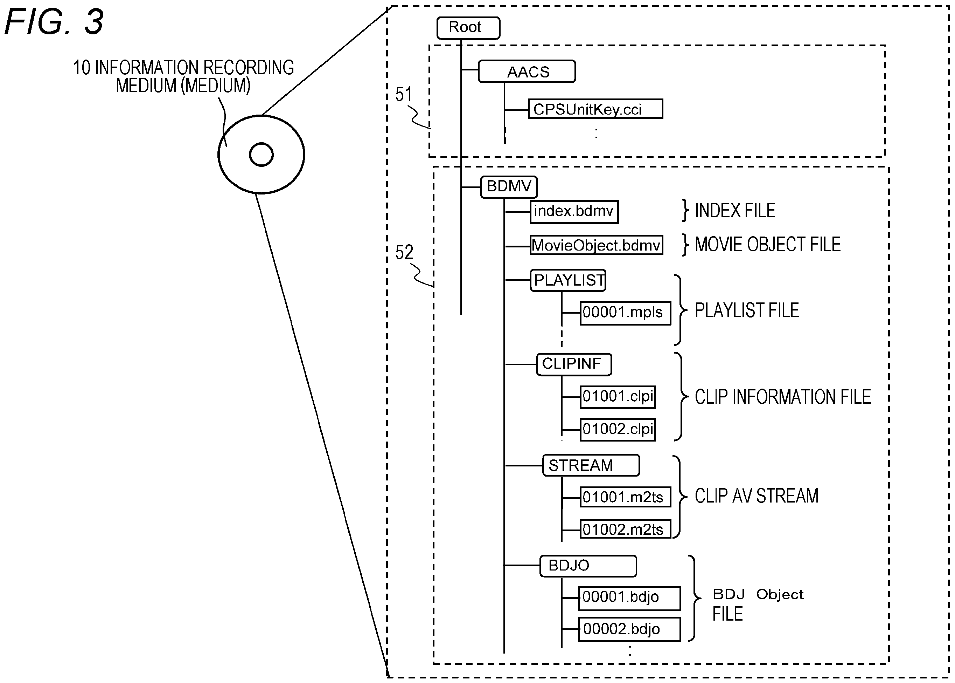

Fig. 3 is a diagram illustrating a directory of data in a BDMV format recorded in the information recording medium (medium) 10 as a ROM-type Blu-ray (registered trademark) disc (BD), for example.

The directory is separated into a management information setting part 51 (AACS directory) and a data part 52 (BDMV directory) as illustrated in Fig. 3.

The management information setting part 51 (AACS directory) stores a CPS unit key file as a data encryption key, a utilization control information file, and others.

The CPS unit key file stores a CPS unit key as encryption key data to be applied to decrypt encrypted data as reproduction target data stored in a clip AV stream file.

The reproduction device acquires the CPS unit key from the CPS unit key file by a device key stored in the reproduction device or a process using the data stored in the disc, and uses the acquired CPS unit key to decrypt the encrypted data stored in the clip AV stream file and perform a reproduction process.

On the other hand, the BDMV directory of the data part 52 stores an index file, a playlist file, a clip information file, a clip AV stream file, and a BDJO file, for example.

The index file stores, for example, management information corresponding to overall disc-stored data such as title information as index information to be applied to the reproduction process.

The playlist file is a file that prescribes, for example, the order of reproduction of contents according to program information in a reproduction program specified by the title. The playlist file has specification information and the like for a clip information file recording reproduction position information and the like, for example.

The clip information file is a file specified by the playlist file, which includes reproduction position information for the clip AV stream file, and the like.

The clip AV stream file is a file that stores AV stream data to be reproduced. The clip AV steam file includes packets storing data of images, sounds, subtitles, and others to be reproduced.

The BDJO file is a file storing execution control information for a file storing a JAVA (registered trademark) program, commands, and others.

For reference, the index file, the playlist file, the clip information file are files storing management information, reproduction control information, reproduction data attribute information, and others applied to the reproduction process of images, sounds, subtitles, and others as reproduction data stored in the clip AV stream file.

The sequence of reproduction of contents recorded in an information recording medium by the information processing device is as follows:
(a) First, a specific title is specified from the index file by a reproduction application.
(b) A reproduction program associated with the specified title is selected.
(c) A playlist prescribing the order of reproduction of contents and others is selected according to program information in the selected reproduction program.
(d) An AV stream or a command as real contents data is read based on the clip information prescribed in the selected playlist to reproduce the AV stream or execute the command.

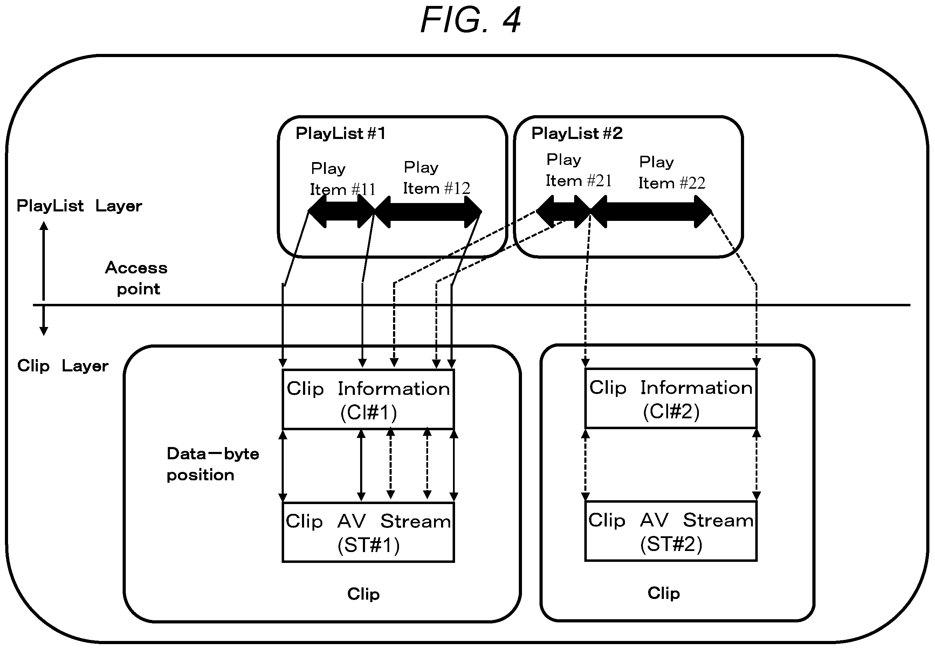

Fig. 4 is a diagram describing correspondence among playlist files, clip information files, and clip AV stream files recorded in the information recording medium 10.

The AV streams including actual reproduction target data such as images, sounds, and subtitles are recorded as clip AV stream files. Further, the playlist files and the clip information files are prescribed as files of management information and reproduction control information for these AV streams.

These files in the plurality of categories can be divided into two layers, a playlist layer including the playlist files and a clip layer including the clip AV stream files and the clip information files as illustrated in Fig. 4.

Note that one clip AV stream file is associated with one clip information file. This pair is regarded as one object and is collectively a clip or a clip file.

The clip information file includes detailed information as to data included in the clip AV stream file, for example, management information such as an EP map recording I picture position information for MPEG data and the like.

The clip AV stream file stores data in which MPEG-2TS (transport stream) is arranged according to a prescribed structure in BDMV format.

In addition, the clip information file stores, for example, management information for acquiring the reproduction start position and the like of the data stored in the clip AV stream file such as data regarding correspondence between the position of byte string data in the clip AV stream file, the reproduction time position as a reproduction start point (entry point (EP)) in a case of development on a time axis, and the like.

The playlist has information indicating access points corresponding to the reproduction start position and the reproduction end position of the clip by time stamps as information on a time axis.

For example, it is possible to refer to the clip information file on the basis of the time stamp indicating the position of elapsed reproduction time from the start point of the contents to acquire the position of reading data in the clip AV stream, that is, the address of the reproduction start point.

The clip information file is used to find information of the address where to start decoding of a stream in the clip AV stream file from the time stamp.

In this way, the playlist file has information specifying a reproduction section in the reproducible data included in the clip (= clip information file + clip AV stream file) layer.

The playlist file has one or more playitems, and each of the playitems has information specifying the reproduction section in the reproducible data included in the clip (= clip information file + clip AV stream file) layer.

As described above with reference to Fig. 3, the data stored under the BDMV directory in the data part 52 are the index file, the playlist file, the clip information file, and the clip AV stream file.

For example, the reproduction target data such as HDR image data and SDR image data is stored in the clip AV stream file.

The database files such as the index file, the playlist file, and the clip information file are files storing various types of data to be applied to the reproduction process of reproduction target data stored in the clip AV stream file. The database files can record attribute information and the like of the data stored in the clip AV stream file.

Descriptions will be given below as to an example in which image information for checking the type of image data recorded on the information recording medium, that is, which type of image among HDR1, HDR2, and SDR, is recorded on the database files such as the index file, the playlist file, and the clip information file.

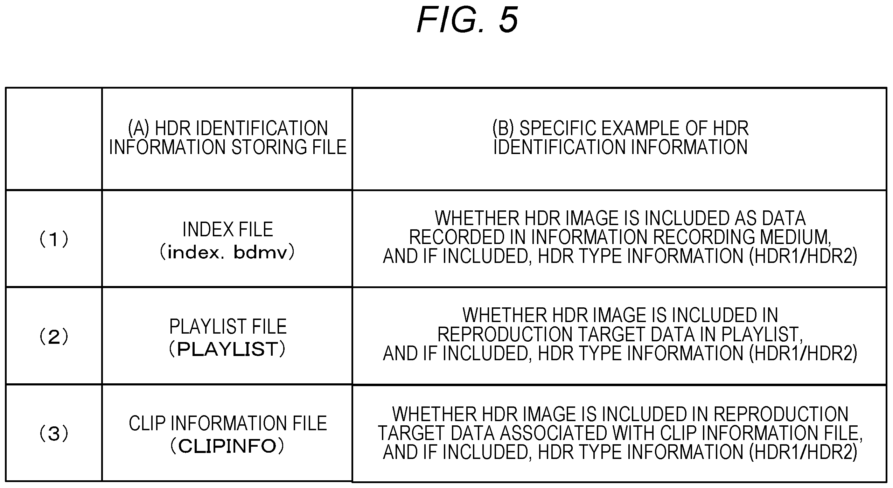

Fig. 5 is a diagram describing specific examples of HDR identification information as image information stored in the index file, the playlist file, and the clip information file.

The index file can record information regarding data recorded in the entire information recording medium. The HDR identification information recorded in the index file is as follows:
"HDR type information indicating whether an HDR image is included in the data recorded in the information recording medium, and if included, the recorded data is an HDR1 image or an HDR2 image"

The playlist file can record information regarding data to be reproduced using the playlist. The HDR identification information recorded in the playlist file is as follows:
"HDR type information indicating whether an HDR image is included in the reproduction target data in accordance with the playlist, and if included, the reproduction target data is an HDR1 image or an HDR2 image"

The clip information file can record information regarding data to be reproduced using the clip information file. The HDR identification information recorded in the clip information file is as follows: "HDR type information indicating whether an HDR image is included in the reproduction target data associated with the clip information file, and if included, the reproduction target data is an HDR1 image or an HDR2 image"

Examples of recording specific HDR identification information in the index file, the playlist file, and the clip information file will be described in sequence.

### [2-2. Example of recording HDR identification information in an index file]

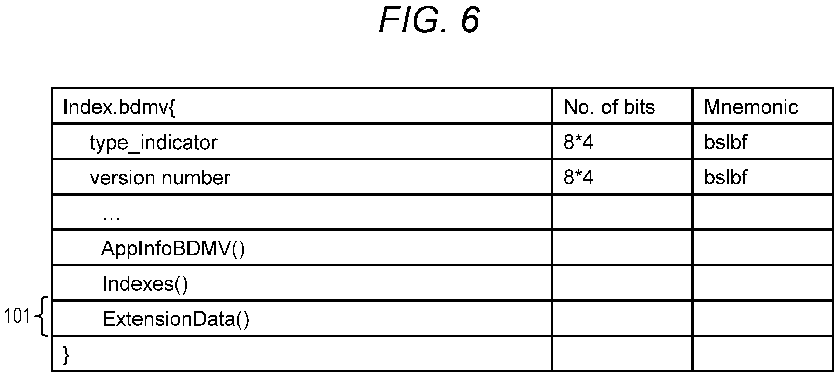

First, an example of recording the HDR identification information in the index file will be described with reference to Fig. 6 and subsequent drawings.

As described above with reference to Fig. 5, the index file can record information regarding data recorded in the entire information recording medium. The HDR identification information to be recorded in the index file is as follows:
"HDR type information indicating whether an HDR image is included in the data recorded in the information recording medium, and if included, the recorded data is an HDR1 image or an HDR2 image"

Fig. 6 is a diagram illustrating a data configuration example (syntax) of the index file.

The index file records information regarding entire data recorded in the information recording medium, for example, title information and others.

The index file has an extension data record region ExtensionData() 101 where various types of extension data can be recorded as illustrated in Fig. 6.

Note that since various types of extension data is recorded in the extension data record region ExtensionData(), extension data identifiers indicating the type of each extension data are associated with the extension data and are recorded together with the extension data.

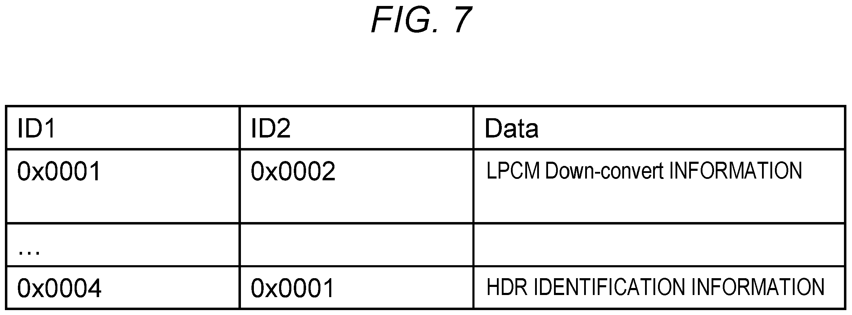

Fig. 7 illustrates examples of extension data identifiers.

Each of the extension data identifiers includes two IDs (ID1 and ID2).

Some extension data identifiers for the index file have been already defined. For example, the extension data identifiers ID1 = 0x0001 and ID2 = 0x0002 are defined as regions for recording down-convert information of linear PCM (LPCM).

The combination of the extension data identifiers ID1 = 0x0004 and ID2 = 0x0001 is not yet defined. These extension data identifiers are set as identifiers indicating the extension data record region for recording HDR identification information below, that is, the following HDR identification information.
"HDR type information indicating whether an HDR image is included in the data recorded in the information recording medium, and if included, the recorded data is an HDR1 image or an HDR2 image"

Note that the settings of the extension data identifiers illustrated in Fig. 7, ID1 = 0x0004 and ID2 = 0x0001 are mere examples, and other IDs can be used as IDs indicating the record region for the HDR identification information.

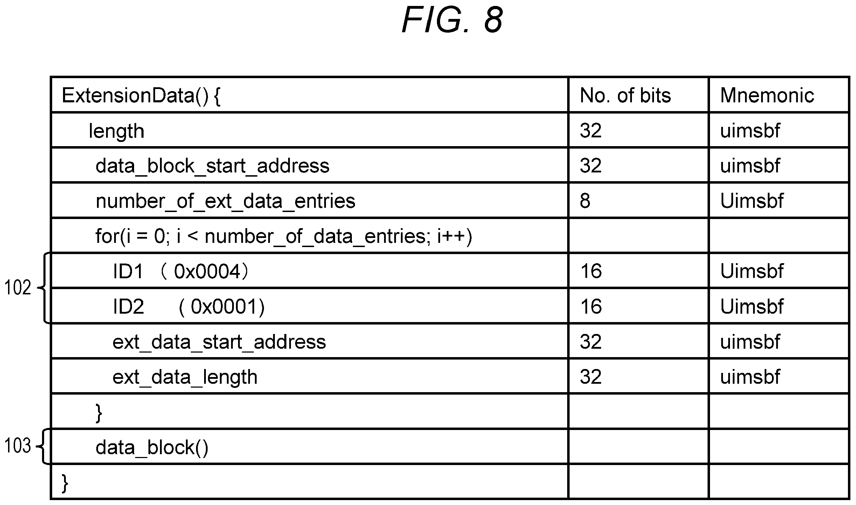

Fig. 8 is a diagram illustrating a configuration example (syntax) of data record region for the HDR identification information recorded in the extension data record region ExtensionData() 101 in the index file illustrated in Fig. 6.

As illustrated in Fig. 8, the extension data record region 101 in the index file has an extension data identifier (ID) record region 102 and a data block (data_block) 103.

The IDs (ID1 = 0x0004 and ID2 = 0x0001) indicating the record region for the HDR identification information are recorded in the extension data identifier (ID) record region 102.

Following the extension data identifier (ID) record region 102, the data block (data_block) 103 as a record region for the HDR identification information is set.

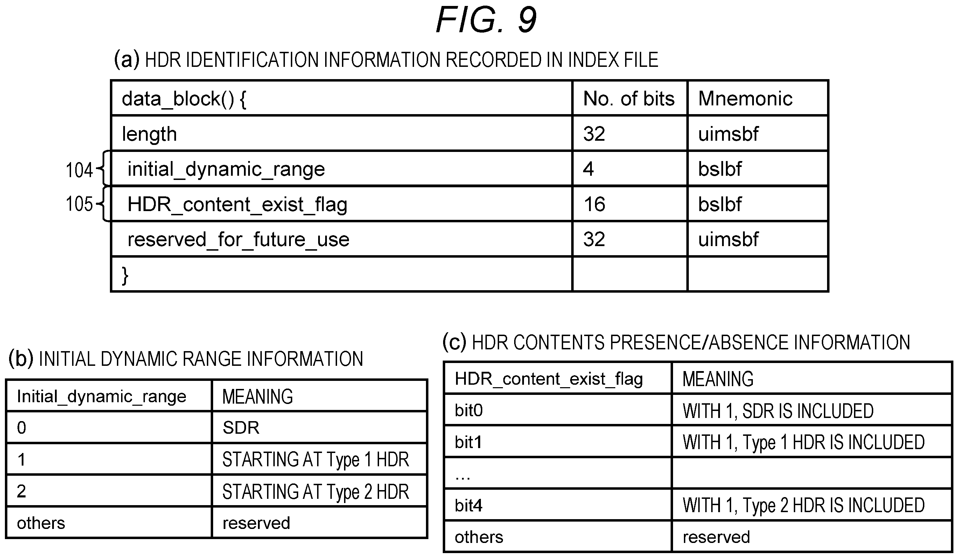

Specific data recorded in the data block (data_block) 103 will be described with reference to Fig. 9.

Fig. 9(a) is a diagram illustrating a detailed configuration of the data block (data_block) 103 illustrated in Fig. 8. That is, Fig. 9(a) illustrates specific data of the HDR identification information recorded in the index file.

As illustrated in Fig. 9(a), the data block has the following data record regions:
(1) Initial dynamic range (initial_dynamic_range) record region 104
(2) HDR contents presence/absence flag (HDR_content_exist_flag) record region 105

Fig. 9(b) illustrates an example of data recorded in the (1) initial dynamic range (initial_dynamic_range) record region 104.

Recorded in the initial dynamic range (initial_dynamic_range) record region 104 is information indicating the type (SDR/HDR1/HDR2) of image data to be first displayed (initial image) in the display unit at the start of reproduction of the information recording medium (disc) where the index file is recorded.

For reference, the information regarding the type of the image to be first displayed constitutes information necessary for initial setting of a display mode in the display device such as a TV, for example.

If the initial image is an HDR1 image, for example, the display device sets the display mode compatible with HDR1 images.

The initial dynamic range (initial_dynamic_range) record region 104 is a 4-bit data, for example, and the type of the initial image can be identified as described below according to the value (0, 1, or 2) recorded in the region as illustrated in Fig. 9(b).

Initial dynamic range setting value = 0: The initial image is an SDR image.

Initial dynamic range setting value = 1: The initial image is an HDR1 image.

Initial dynamic range setting value = 2: The initial image is an HDR2 image.

In addition, Fig. 9(c) illustrates an example of data recorded in (2) HDR contents presence/absence flag (HDR_content_exist_flag) record region 105.

Recorded in the HDR contents presence/absence flag (HDR_content_exist_flag) record region 105 is information indicating the type (SDR/HDR1/HDR2) of the image data recorded in the information recording medium (disc) where the index file is recorded.

The HDR contents presence/absence flag (HDR_content_exist_flag) record region 105 is 16-bit data, for example.

As illustrated in Fig. 9(c), the type (SDR/HDR1/HDR2) of the image data recorded in the information recording medium (disc) can be identified as described below according to the value of the 16 constituent bits (bit0 to bit15) recorded in the HDR contents presence/absence flag (HDR_content_exist_flag) record region 105.

bit0 = 1 out of the 16 bits in the HDR contents presence/absence flag record region: an SDR image is included in the data recorded in the information recording medium.

bit1 = 1 out of the 16 bits in the HDR contents presence/absence flag record region: an HDR1 image is included in the data recorded in the information recording medium.

bit4 = 1 out of the 16 bits in the HDR contents presence/absence flag record region: an HDR2 image is included in the data recorded in the information recording medium.

### [2-3. Example of recording HDR identification information in a playlist file]

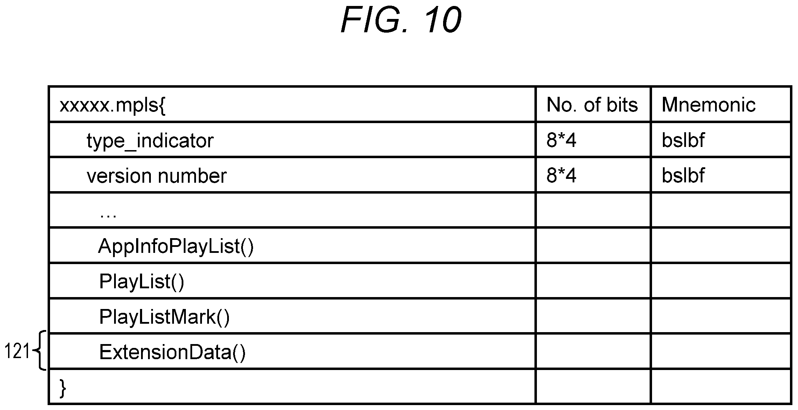

Next, an example of recording the HDR identification information in the playlist file will be described with reference to Fig. 10.

As described above with reference to Fig. 5, the playlist file can record information regarding data to be reproduced using the playlist, and the HDR identification information recorded in the playlist file is as follows: "HDR type information indicating whether an HDR image is included in the reproduction target data in accordance with the playlist, and if included, the reproduction target data is an HDR1 image or an HDR2 image"

Fig. 10 is a diagram illustrating a data configuration example (syntax) of the playlist file.

The playlist file records information regarding data to be reproduced using the playlist.

The playlist file has an extension data record region ExtensionData() 121 where various types of extension data are recordable as illustrated in Fig. 10.

It should be noted that, as with the index file described above, since various types of extension data is recorded in the extension data record region ExtensionData(), extension data identifiers indicating the type of extension data are associated with the extension data and are recorded together with the extension data.

Each of the extension data identifiers includes two IDs (ID1 and ID2).

In the example, as the extension data identifier indicating the HDR identification information storage region in the playlist file, undefined extension data identifiers ID1 = 0x0004 and ID2 = 0x0002 are utilized.

HDR identification information, that is, the following HDR identification information is recorded in the extension data record region associated with the identification information:
"HDR type information indicating whether an HDR image is included in the reproduction target data in accordance with the playlist, and if included, the reproduction target data is an HDR1 image or an HDR2 image"

Note that the settings of the extension data identifiers, that is, ID1 = 0x0004 and ID2 = 0x0002 are mere examples, and other IDs can be used as IDs indicating the record region for the HDR identification information.

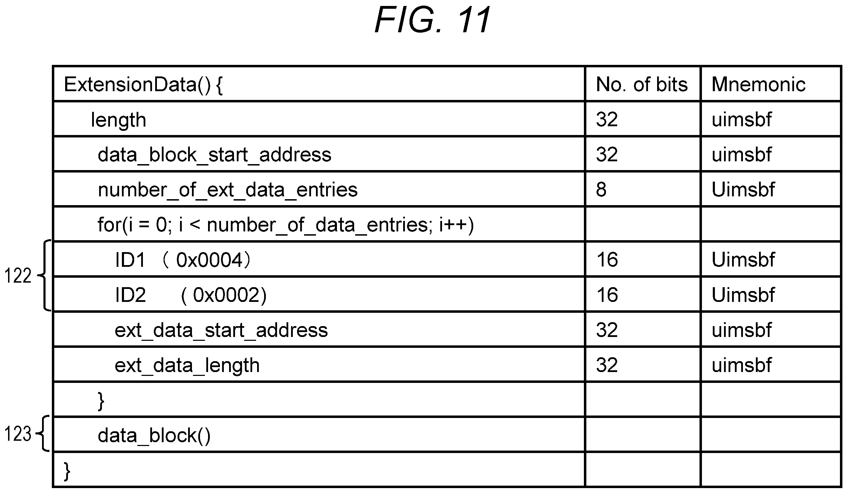

Fig. 11 is a diagram illustrating a configuration example (syntax) of a data record region for the HDR identification information recorded in the extension data record region ExtensionData() 121 in the playlist file illustrated in Fig. 10.

As illustrated in Fig. 11, the extension data record region 121 in the playlist file has an extension data identifier (ID) record region 122 and a data block (data_block) 123.

The extension data identifier (ID) record region 122 records IDs (ID1 = 0x0004 and ID2 = 0x0002) indicating the record region for the HDR identification information described above.

Following the extension data identifier (ID) record region 122, the data block (data_block) 123 as a record region for the HDR identification information is set.

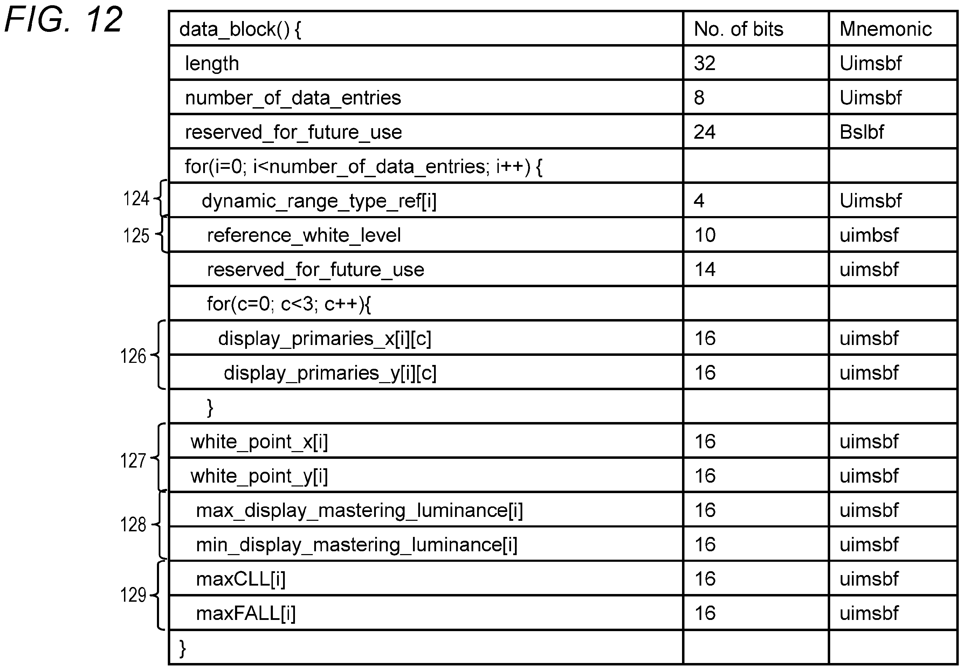

Specific data recorded in the data block (data_block) 123 will be described with reference to Fig. 12 and subsequent diagrams.

Fig. 12 is a diagram illustrating a detailed configuration of the data block (data_block) 123 illustrated in Fig. 11. That is, Fig. 12 illustrates a specific data example of the HDR identification information recorded in the playlist file.

As illustrated in Fig. 12, the data block has the following data record regions:
(1) Dynamic range type information (dynamic_range_type_ref) 124
(2) Reference white level (reference_white_revel) 125
(3) Display color characteristics 126 [X coordinate (display_primaries_x) and Y coordinate (display_primaries_y)]
(4) Reference white coordinate 127 [X coordinate (white_point_x) and Y coordinate (white_point_y)]
(5) Display maximum/minimum luminance information 128 [maximum luminance (max_display_mastering_luminance) and minimum luminance (min_display_mastering_luminance)]
(6) Contents luminance information 129 [maximum luminance (maxCLL) and average luminance (maxFALL)]

The foregoing information items will be described below in sequence.

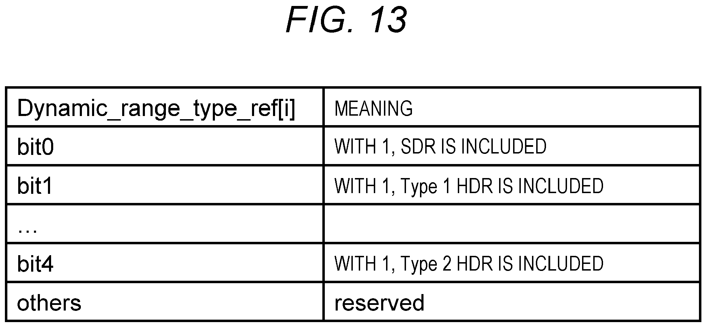

Fig. 13 illustrates an example of data recorded in (1) dynamic range type information (dynamic_range_type_ref) 124.

Recorded as the dynamic range type information (dynamic_range_type_ref) 124 is information indicating the type (SDR/HDR1/HDR2) of the reproduction target data in accordance with the playlist.

The dynamic range type information (dynamic_range_type_ref) 124 is 4-bit data, for example, and the bit value settings and their meanings are as described in Fig. 13.

bit0 = 1 out of the 4 bits of the dynamic range type information: an SDR image is included in the reproduction target data in accordance with the playlist.

bit1 = 1 out of the 4 bits of the dynamic range type information: an HDR1 image is included in the reproduction target data in accordance with the playlist.

bit4 = 1 out of the 4 bits of the dynamic range type information: an HDR2 image is included in the reproduction target data in accordance with the playlist.

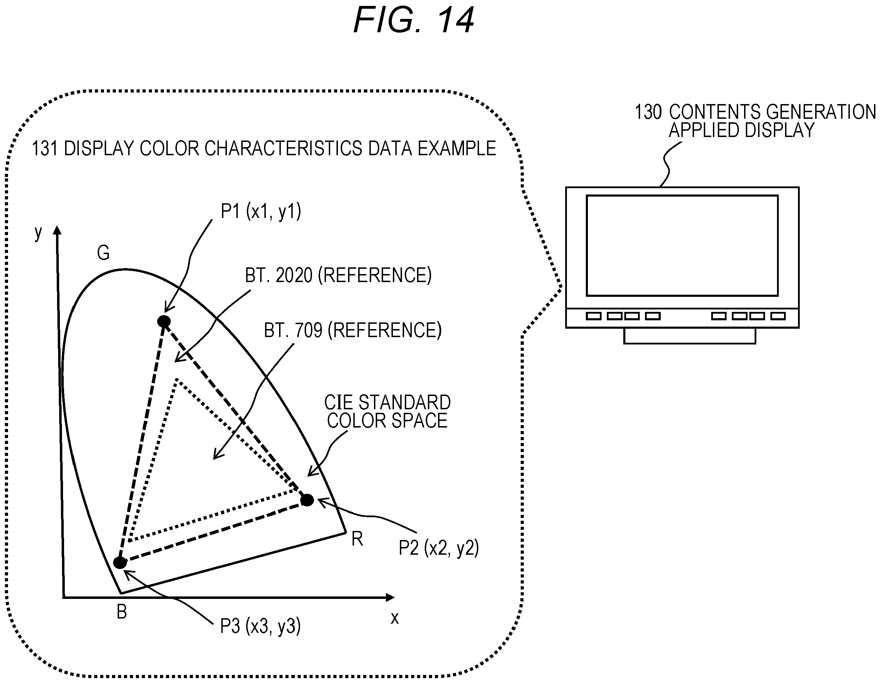

Next, the (3) display color characteristics 126 as configuration data of the playlist illustrated in Fig. 12 will be described with reference to Fig. 14.

Recorded as the display color characteristics 126 is color characteristic information as to the display used at the generation of the image data as reproduction target data in accordance with the playlist.

For example, the color characteristic information as to a contents generation display 130 illustrated in Fig. 13 can be applied.

Display characteristics are different among individual displays. Grasping the characteristics of the display having been used at creation of contents allows accurate output color adjustments at display of the contents.

The display color characteristics 126 is data recorded for such a process, and the color characteristics of the display used at the generation of the contents are recorded.

Specifically, xy coordinate information (x1, y1), (x2, y2), (x3, y3) of P1, P2, and P3 in a display color characteristics data example 131 illustrated in Fig. 14 is recorded, for example.

The triangle defined by P1, P2, and P3 in the display color characteristics data example 131 illustrated in Fig. 14 represents a region of colors that can be output by the contents generation display 130.

For reference, Fig. 14 illustrates a CIE color space, a BT.709 color space applied to general SDR images, and a BT.2020 color space applied to HDR images.

P1, P2, and P3 illustrated in Fig. 14 coincide with the BT.2020 color space. For example, in a case where the P1, P2, and P3 coordinate information is recorded as the display color characteristics 126 in the playlist file illustrated in Fig. 12, it can be found that the reproduction image data in the playlist has been created using the display with an output color region compatible with the BT.2020 color space.

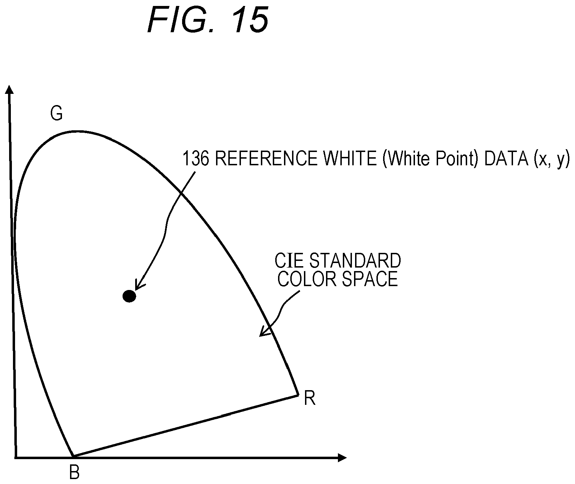

Next, as configuration data of the playlist file illustrated in Fig. 12, (4) reference white coordinates 127 [X coordinate (white_point_x) and Y coordinate (white_point_y)] will be described with reference to Fig. 15.

The reference white coordinates 127 constitute information indicating white color (reference white color) as a reference to be applied to image data as reproduction target data in accordance with the playlist.

As illustrated in Fig. 15, for example, the coordinates (x, y) of a reference white position in the CIE color space are recorded.

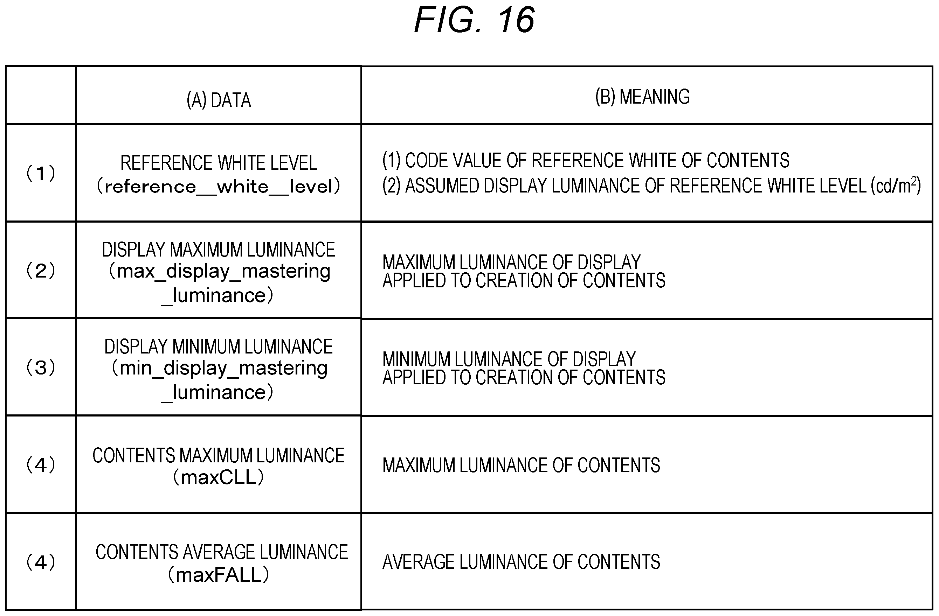

Next, other configuration data in the playlist file illustrated in Fig. 12 will be described with reference to Fig. 16.

The reference white level (reference_white_revel) 125 is a region for recording at least one or both of the code value of a reference white and the assumed display luminance (cd/m²) of reference white level applied to the reproduction image data in accordance with the playlist.

Recorded as the display maximum/minimum luminance information 128 [maximum luminance (max_display_mastering_luminance) and minimum luminance (min_display_mastering_luminance)] is information regarding the maximum luminance and minimum luminance of the display that has been used to create the contents including the reproduction image data in accordance with the playlist.

Recorded in the contents luminance information 129 [maximum luminance (maxCLL) and average luminance (maxFALL)] are maximum luminance and average luminance information in the reproduction image data in accordance with the playlist.

In a case where the foregoing information is recorded in the playlist file and the image is reproduced using the playlist, it is possible to refer to the information and perform proper processing according to the image characteristics based on the referred information.

### [2-4. Example of recording HDR identification information in a clip information file]

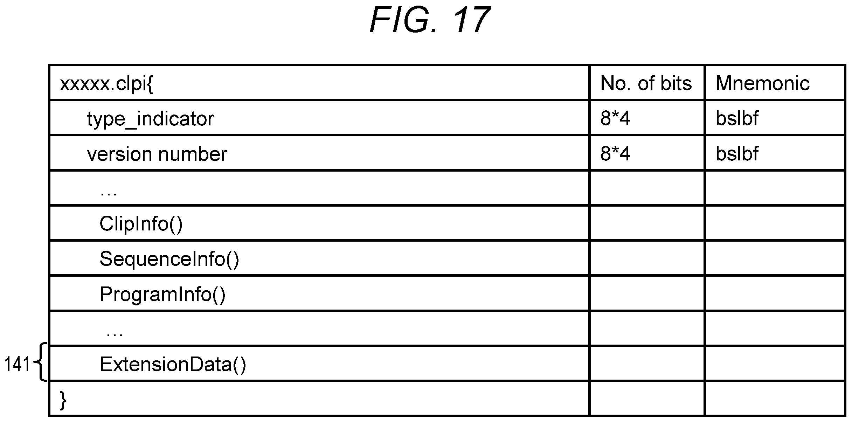

Next, an example of recording the HDR identification information in the clip information file will be described with reference to Fig. 17 and subsequent drawings.

As described above with reference to Fig. 5, the clip information file can record information regarding reproduction target data associated with the clip information file. The HDR identification information recorded in the clip information file is as follows:
"HDR type information indicating whether an HDR image is included in the reproduction target data associated with the clip information file, and if included, the reproduction target data is an HDR1 image or an HDR2 image"

Fig. 17 is a diagram illustrating a data configuration example (syntax) of the clip information file.

The clip information file records information regarding reproduction data associated with the clip information.

The clip information file has an extension data record region ExtensionData() 141 where various extension data is recordable as illustrated in Fig. 17.

It should be noted that, as with the index file and the playlist file described above, since various types of extension data is recorded in the extension data record region ExtensionData(), extension data identifiers indicating the type of extension data are associated with the extension data and are recorded together with the extension data.

Each of the extension data identifiers includes two IDs (ID1 and ID2).

In the example, as the extension data identifier indicating the HDR identification information storage region in the clip information file, undefined extension data identifiers ID1 = 0x0004 and ID2 = 0x0003 are utilized.

HDR identification information, that is, the following HDR identification information is recorded in the extension data record region associated with the identification information:
"HDR type information indicating whether an HDR image is included in the reproduction target data associated with the clip information file, and if included, whether the reproduction target data is an HDR1 image or an HDR2 image"

Note that the settings of the extension data identifiers, that is, ID1 = 0x0004 and ID2 = 0x0003 are mere examples, and other IDs can be used as IDs indicating the record region for the HDR identification information.

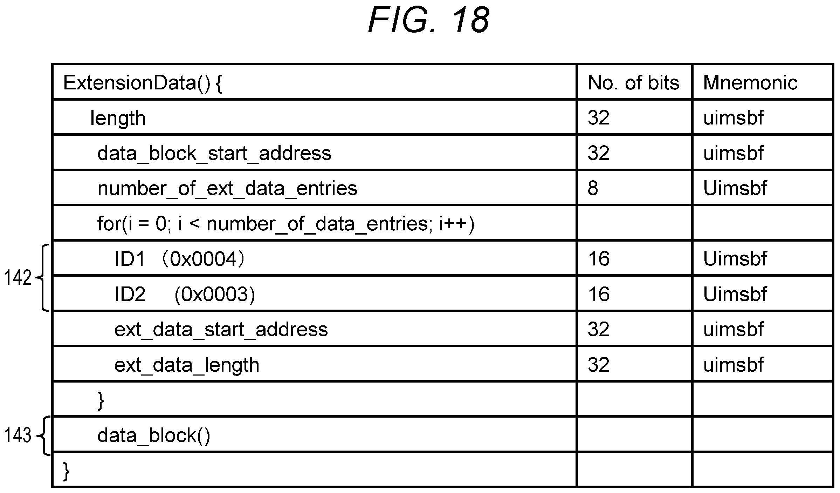

Fig. 18 is a diagram illustrating a configuration example (syntax) of a data record region for the HDR identification information recorded in the extension data record region ExtensionData() 141 in the clip information file illustrated in Fig. 17.

As illustrated in Fig. 18, the extension data record region 141 in the clip information file has an extension data identifier (ID) record region 142 and a data block (data_block) 143.

The extension data identifier (ID) record region 142 records IDs (ID1 = 0x0004 and ID2 = 0x0003) indicating the record region for the HDR identification information described above.

Following the extension data identifier (ID) record region 142, the data block (data_block) 143 as a record region for the HDR identification information is set.

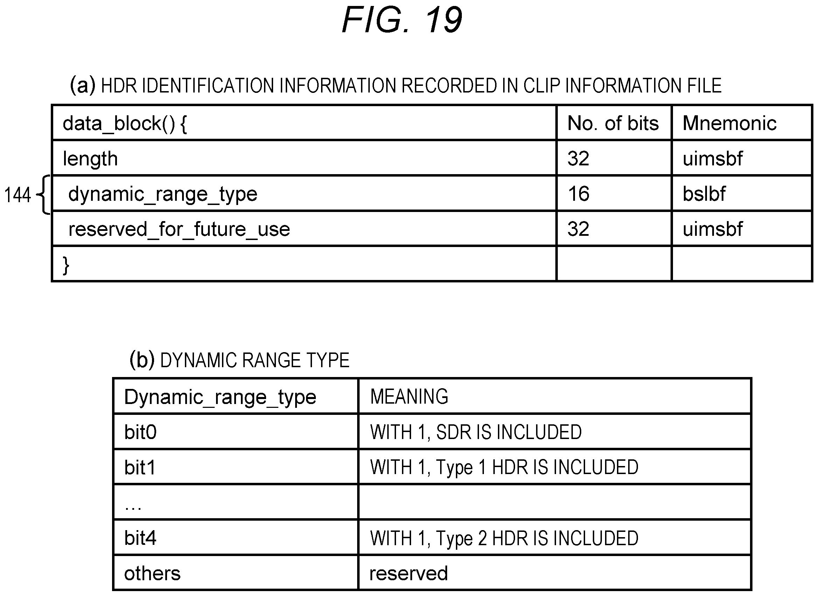

Specific data recorded in the data block (data_block) 143 will be described with reference to Fig. 19.

Fig. 19 is a diagram illustrating a detailed configuration of the data block (data_block) 143 illustrated in Fig. 18. That is, Fig. 19 illustrates a specific data example of the HDR identification information recorded in the clip information file.

As illustrated in Fig. 19(a), the data block has the following data record regions:

### (1) Dynamic range type (dynamic_range_type) 144

Fig. 19(b) describes an example of data recorded in dynamic range type information (dynamic_range_type_ref) 144.

The dynamic range type information (dynamic_range_type) 144 is 16-bit data, for example, and the bit value settings (bit0 to bit15) and their meanings correspond to each other as described in Fig. 19(b).

bit0 = 1 out of the 16 bits of the dynamic range type information: an SDR image is included in the reproduction target data associated with the clip information file.

bit1 = 1 out of the 4 bits of the dynamic range type information: an HDR1 image is included in the reproduction target data associated with the clip information file.

bit4 = 1 out of the 4 bits of the dynamic range type information: an HDR2 image is included in the reproduction target data associated with the clip information file.

The foregoing HDR identification information is recorded in the clip information file. In a case of image reproduction using the clip information, it is possible to refer to the clip information and perform proper reproduction processing according to the image characteristics and others acquired from the referred information.

### [3. Example of information input/output configuration between a reproduction device and a display device]

As described above with reference to Fig. 2 and others, for example, the following processes are necessary for the reproduction device (BD player) 20 to reproduce image data recorded in the information recording medium 10 such as a Blu-ray (registered trademark) disc (BD) and for the display devices 30a to 30c to display normally the image, for example:
(1) The reproduction device 20 ascertains the type of the image data recorded in the information recording medium (BD) 10, that is, which of the types HDR1, HDR2, and SDR of image is recorded in the information recording medium (BD) 10.
(2) The reproduction device 20 ascertains the type of the image data capable of being displayed by the display device connected to the reproduction device, that is, which of the types HDR1, HDR2, and SDR of image is capable of being displayed by the display device.
(3) The display devices 30a to 30c ascertain which of types HDR1, HDR2, and SDR of image data is to be input from the reproduction device 20.

Performing these ascertainment processes (1) to (3) before output of the image data from the reproduction device 20 to the display devices 30a to 30c allows normal reproduction and display according to the individual image types.

The process (1) is implemented by the reproduction device referring to the HDR identification information recorded in the information recording medium, that is, the HDR identification information recorded in the database files such as the index file, the playlist file, and the clip information file.

On the other hand, to perform the ascertainment processes (2) and (3), it is necessary to input and output information between the reproduction device and the display device.

These processes will be described below.

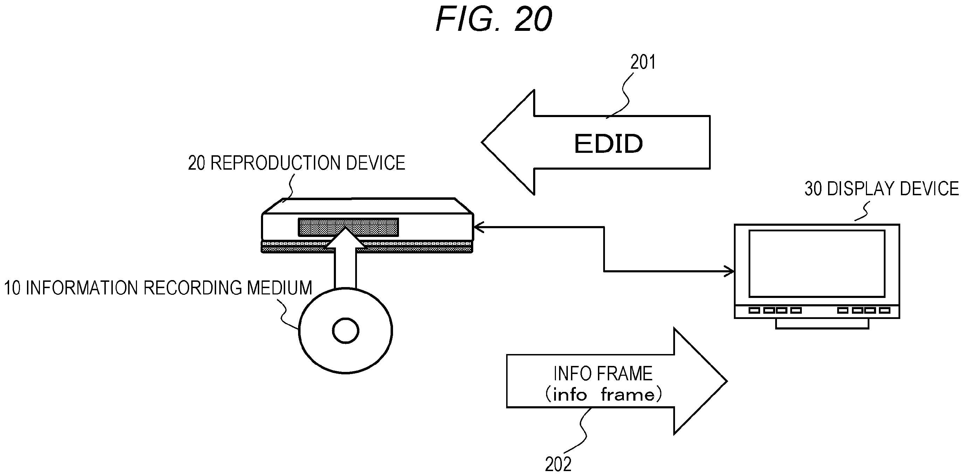

Fig. 20 illustrates the reproduction device 20 with the information recording medium 10 such as a BD and the display device 30 such as a TV displaying the reproduction data from the reproduction device 20.

The reproduction device 20 and the display device 30 are connected together via an HDMI (registered trademark) cable or the like, for example, to transmit and receive various data to and from each other.

Note that a connection configuration of the reproduction device 20 and the display device 30 is not limited to an HDMI (registered trademark) cable but other various connection configurations can be used. For example, the reproduction device 20 and the display device 30 may be configured to communicate with each other via a wireless network.

When a communication connection between the reproduction device 20 and the display device 30 is established, the display device 30 outputs display device function information and the like to the reproduction device 20.

Specifically, as illustrated in Fig. 20, the display device 30 outputs extended display identification data (EDID) 201 prescribed by HDMI (registered trademark), for example.

The EDID includes the display device function information indicating the type of image that can be output by the display device 30 can output, and the like.

The reproduction device 20 stores the display device function information received from the display device 30 in the storage unit. Specifically, the reproduction device 20 stores the received information in a player status resister (PSR), for example.

On the other hand, at the reproduction of the contents stored in the information recording medium 10, the reproduction device 20 stores reproduction data information regarding the reproduction process data in an info frame illustrated in Fig. 20 and sends the same to the display device 30.

Hereinafter, descriptions will be given in sequence as to a specific configuration example of an EDID 201 as display device information transmitted by the display device 30 to the reproduction device 20 and a specific configuration example of an info frame 202 storing the reproduction data information transmitted by the reproduction device 20 to the display device 30.

### [3-1. Display device information transmitted by the display device to the reproduction device]

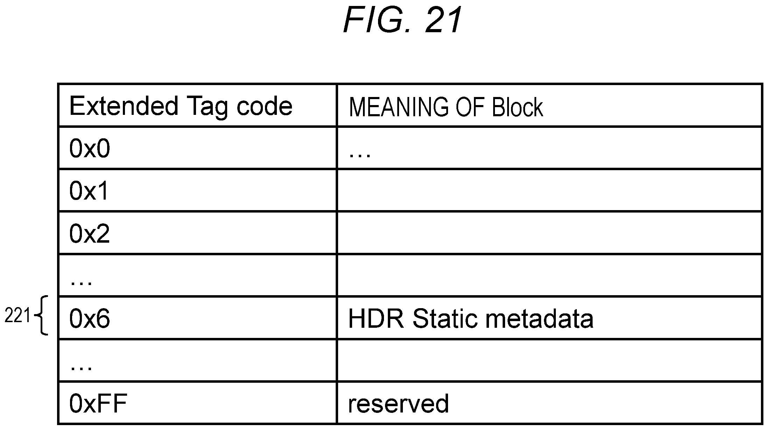

First, the display device information transmitted by the display device 30 to the reproduction device 20 will be described with reference to Fig. 21 and subsequent drawings.

Fig. 21 is a diagram illustrating a data configuration example of extended display identification data (EDID) as display device function information transmitted by the display device 30 to the reproduction device 20.

EDID refers to a 256-byte data block defined by CEA861 that is standards stipulated by Consumer Electronics Association (CEA) as a standard setting body.

The display device 30 stores in the EDID, HDR reproduction function information (HDR static metadata) 221 indicating the type of image data (SDR/HDR1/HDR2) reproducible by the display device 30, and transmits the same to the reproduction device 20.

For example, as illustrated in Fig. 21, the display device 30 stores the HDR reproduction function information (HDR static metadata) 221 in the EDID tag code [0x6] item of the EDID, and transmits the same to the reproduction device 20.

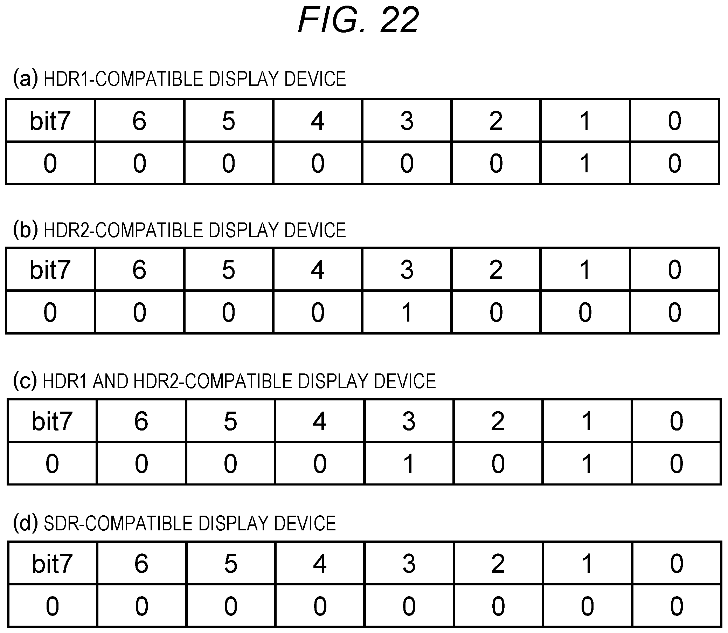

Fig. 22 illustrates specific examples of the HDR reproduction function information (HDR static metadata) 221.

The HDR reproduction function information (HDR static metadata) 221 includes an 8-bit data illustrated in Fig. 22, for example.

As illustrated in Fig. 22(a), in a case where bit1= 1, out of 8 bits (bit0 to bit7) constituting the HDR reproduction function information, it means that the display device 30 has a function of reproducing HDR1-type HDR images.

In addition, as illustrated in Fig. 22(b), in a case where bit3 = 1 out of the 8 bits (bit0 to bit7) constituting the HDR reproduction function information, it means that the display device 30 has a function of reproducing HDR2-type HDR images.

Further, as illustrated in Fig. 22(c), in a case where bit1 = 1 and bit3 = 1 out of the 8 bits (bit0 to bit7) constituting the HDR reproduction function information, it means that the display device 30 has a function of reproducing both HDR1- and HDR2-type HDR images.

Moreover, as illustrated in Fig. 22(d), in a case where all the bits = 0 out of the 8 bits (bit0 to bit7) constituting the HDR reproduction function information, it means that the display device 30 has no function of reproducing HDR images but has a function of reproducing SDR images.

Upon receipt of the EDID including the HDR reproduction function information from the display device 30, the reproduction device 20 stores the data included in the received EDID into a storage unit (player status register (PSR)).

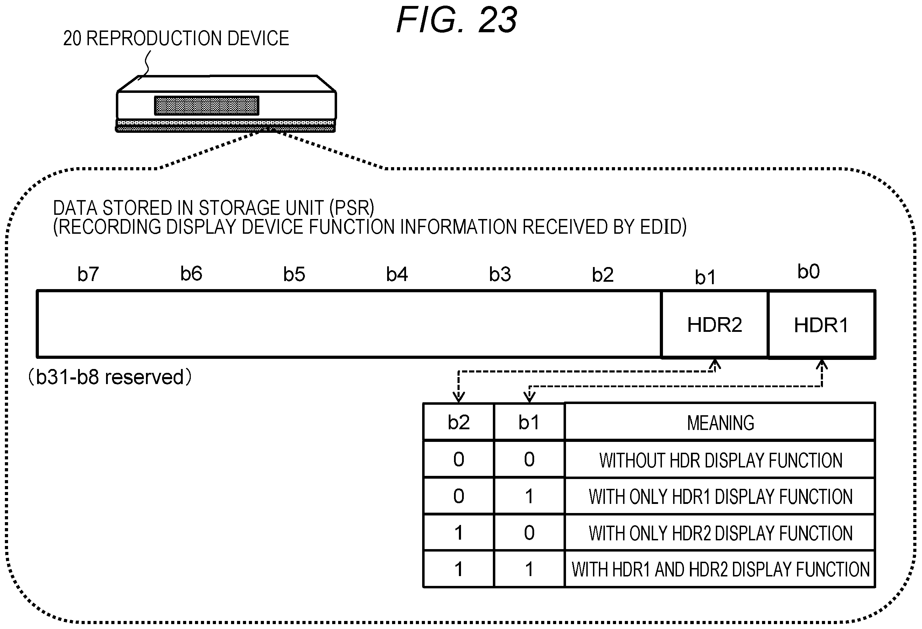

Fig. 23 illustrates an example of display device function information stored in the storage unit (PSR) of the reproduction device 20.

The reproduction device 20 stores the display device function information in a region of the storage unit (PSR), for example, a PSR 26 having a 32-bit data record region.

The reproduction device 20 stores the bit values corresponding to the display function of the display device in the lower-order 2 bits (bit1 and bit0) in the 32-bit region as data record region.

For example, as illustrated in Fig. 23, the correspondence between the bit value settings and the functions of the display device are as follows:
(a) (bit1, bit0) = (0, 0): The display device has no function of displaying HDR images.
(b) (bit1, bit0) = (0, 1): The display device has a function of displaying only HDR1 images.
(c) (bit1, bit0) = (1, 0): The display device has no function of displaying only HDR2 images.
(d) (bit1, bit0) = (1, 1): The display device has a function of displaying HDR1 images and HDR2 images.

The reproduction device 20 stores display function information of the display device in the storage unit (PSR) as illustrated in Fig. 23, on the basis of the EDID received from the display device 30.

The reproduction device 20 can refer to the information stored in the storage unit to determine the display function of the display device 30 connected to the reproduction device 20, that is, whether the displayable image is HDR1, HDR2, or SDR.

For reference, in this case, the display device information transmitted by the display device 30 to the reproduction device 20 is described as EDID. Alternatively, the display device 30 may be configured to transmit and receive data in another format to transmit the display device information. For example, the display device 30 may be configured to transmit the display device information stored in wireless communication packets.

### [3-2. Reproduction data information transmitted by the reproduction device to the display device]

Next, descriptions will be given as to a specific configuration example of an info frame 202 as reproduction data information transmitted by the reproduction device 20 to the display device 30 illustrated in Fig. 20.

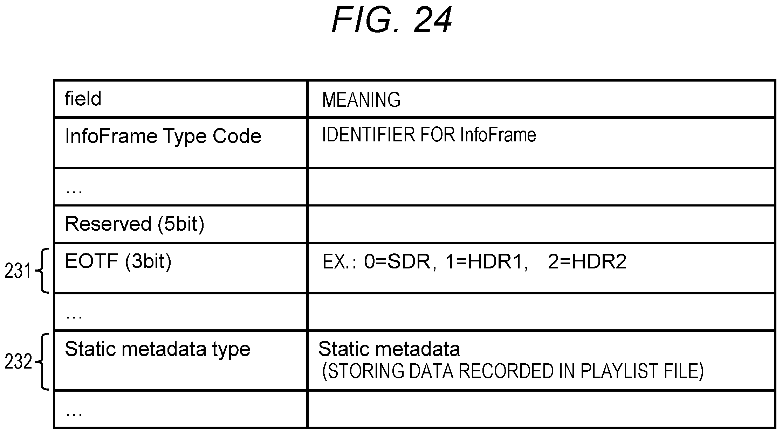

Fig. 24 is a diagram illustrating a specific data configuration example of the info frame 202 transmitted by the reproduction device 20 to the display device 30.

As illustrated in Fig. 24, the info frame 202 has a plurality of fields, and the reproduction device 20 provides various types of information recorded by field to the display device 30.

Such information is reproduction data information that is applied by the display device 30 to a display process and the like of reproduction contents input from the reproduction device 20.

Recorded in an EOTF field 231 is electro-optic transfer function (EOTF) information to be applied to the display process.

For example, in a case where the application of an EOTF compatible with SDR images is required, the EOTF field setting value is 0, and in a case where the application of an EOTF compatible with HDR1 images is required, the EOTF field setting value is 1, and in a case where the application of an EOTF compatible with HDR2 images is required, the EOTF field setting value is 3.

Recorded in a static metadata type field 232 is the information recorded in the playlist to be applied to a reproduction process of reproduction contents.

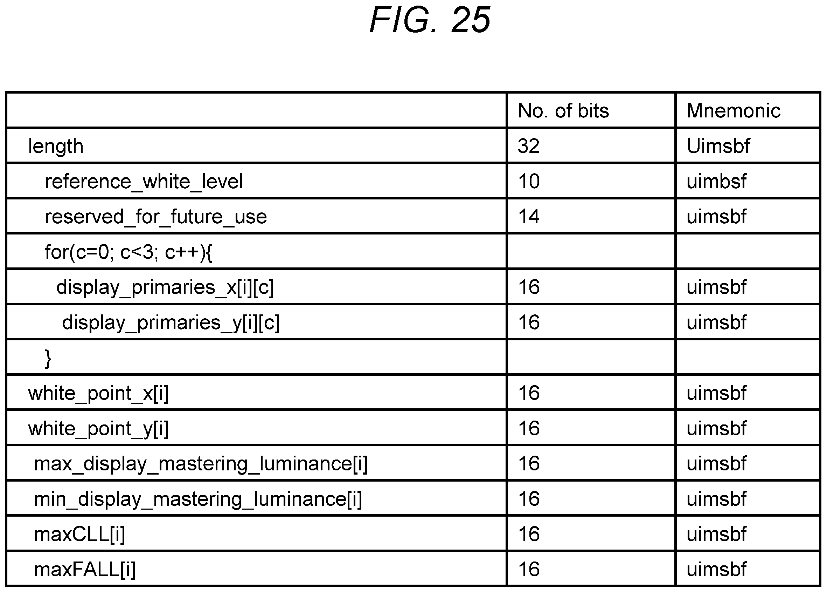

Specifically, the information recorded in the playlist file illustrated in Fig. 25 is stored in this field.

The playlist file illustrated in Fig. 25 is equivalent to part of the playlist file described above with reference to Fig. 12.

The reproduction device 20 extracts information necessary for output of the contents in the display device 30 from the playlist file, and provides the information stored in the static metadata type field 232 in the info frame 202 to the display device 30.

The display device 30 can refer to the data stored in the info frame 202 to perform an appropriate process on the contents input from the reproduction device 20 according to the type of the contents (SDR/HDR1/HDR2) and execute appropriate image display.

### [4. Configuration and processing of an information processing device that records data into an information recording medium]

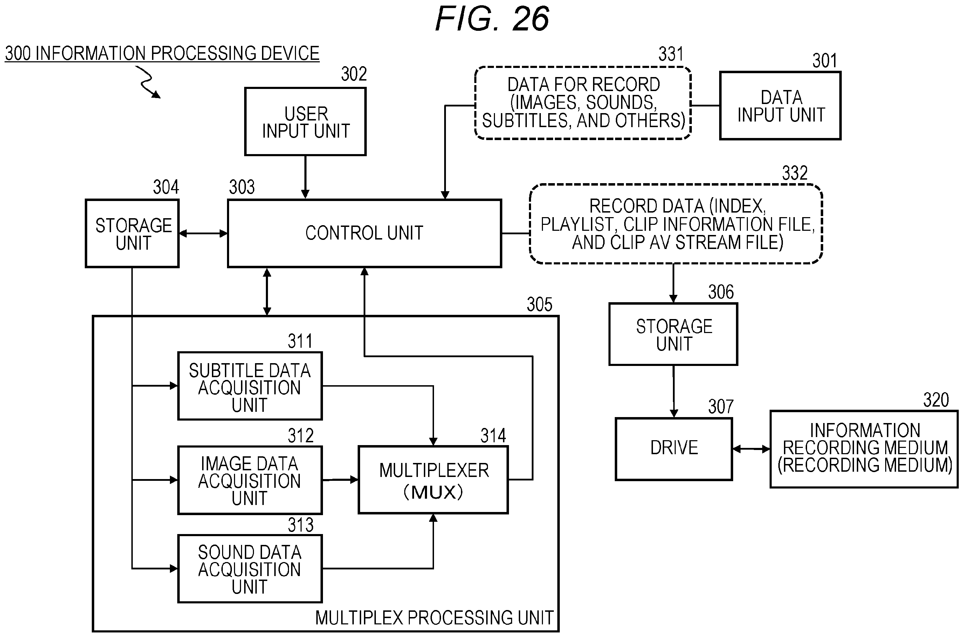

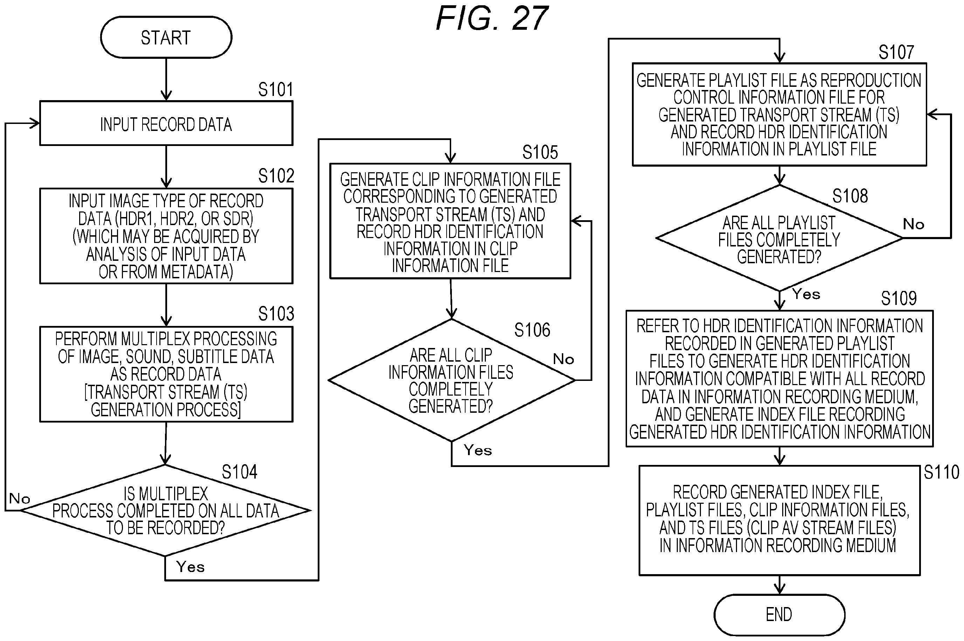

Next, descriptions will be given as to a configuration and processing of an information processing device that records data into an information recording medium with reference to Figs. 26 and 27.

As described above with reference to Fig. 2, to implement normal display of an image on the display device 30 illustrated in Fig. 2, the reproduction device 20 needs to ascertain the type of the image data recorded in the inserted information recording medium (BD) 10, that is, which type of image, HDR1, HDR2, or SDR, is recorded.

To enable the ascertain process, as described above, the HDR identification information and the like are recorded in data files storing management information, attribute information, or reproduction control information regarding image data and others.

In a case where the information recording medium is a Blu-ray (registered trademark) disc (BD), for example, the HDR identification information is recorded in the database files such as the index file, the playlist file, and the clip information file prescribed in the BD format.

Hereinafter, descriptions will be given as to a generation process of an information recording medium recording the HDR identification information as described above, specifically, a configuration of an information processing device recording data into an information recording medium such as a BD and a process sequence.

Fig. 26 is a diagram illustrating a configuration of an information processing device 300 recording data into an information recording medium such as a BD.

The information processing device 300 records a stream file (clip AV stream file) storing an image file such as an HDR1 image, an HDR2 image, or an SDR image in an information recording medium (recording medium) 320 illustrated in Fig. 26, and records database files such as an index file, a playlist file, and a clip information file storing the above described HDR identification information and the like, thereby generating a data-recorded disc in the BD format.

A data input unit 301 inputs record data 331 for the information recording medium 320, that is, record data 331 including image data, sound data, subtitle data, and others. The record data 331 is data created by a contents producer, and is recorded in one or more individual media and input into the information processing device 300 via the media, for example. Alternatively, the data input unit 301 may be configured to input the data via a network or the like.

The record data 331 is stored in a storage unit 304 under control of a control unit 303 and then is input into a multiplex processing unit 305.

The multiplex processing unit 305 has a subtitle data acquisition unit 311, an image data acquisition unit 312, a sound data acquisition unit 313, and a multiplexer (MUX) 314.

The subtitle data acquisition unit 311 acquires subtitle data from the record data 331 input by the data input unit 301 and stored in the storage unit 304.

The image data acquisition unit 312 acquires image data from the record data 331 input by the data input unit 301 and stored in the storage unit 304.

The sound data acquisition unit 313 acquires sound data from the record data 331 input by the data input unit 301 and stored in the storage unit 304.

The multiplexer (MUX) 314 accepts inputs of the respective data of subtitles, images, and sounds acquired by the subtitle data acquisition unit 311, the image data acquisition unit 312, and the sound data acquisition unit 313, and generates a transport stream (TS) file storing all the data. Specifically, for example, the TS file is the clip AV stream file described above with reference to Fig. 3 and others.

The clip AV stream file is output and recorded in the information recording medium 320 by a recording unit 306 via a drive 307 under control of the control unit 303.

The clip AV stream file is configuration data of the record data 332 illustrated in Fig. 26.

A user input unit 302 inputs a request for start of recording data into the information recording medium 320 and others, for example.

The user input unit 302 further inputs the type of the record data, specifically, information regarding, for example, whether the record data includes an SDR image, an HDR1 image, an HDR2 image, or the like.

On the basis of the input information, a control unit 401 generates management data and a reproduction control information file to be recorded in an information recording medium 520. Specifically, the control unit 401 generates the record data 332 including database files such as index file, playlist file, and clip information file recording the HDR identification information described above.

The record data 332 including database files such as index file, playlist file, and clip information file recording the HDR identification information is output from the recording unit 306 to the information recording medium 320 via the drive 307 and recorded in the information recording medium 320 under control of the control unit 303.

Note that, in the example described above, the type of the record data, specifically, the information regarding, for example, whether the record data includes an SDR image, an HDR1 image, an HDR2 image, or the like is input via the user input unit 302. Alternatively, the information may be acquired by the control unit 303 from metadata input together with the record data 331 from the data input unit 301, for example.

Otherwise, the control unit 303 may be configured to analyze the record data 331 input from the data input unit 301 to acquire the image type information.

Next, descriptions will be given as to a sequence of steps of recording data into the information recording medium 320 by the information processing device 300 illustrated in Fig. 26 with reference to the flowchart in Fig. 27.

The process in accordance with the flow described in Fig. 27 can be performed according to a program stored in the storage unit of the information processing device under control of a data processing unit (control unit) including a CPU having a function of executing the program, for example.

The steps described in the flow of Fig. 27 will be described below in sequence.

### (Step S101)

First, in step S101, the information processing device 300 inputs record data via the data input unit 301.

The record data includes image data, sound data, subtitle data, and others.

The image data includes an SDR image, an HDR1 image, an HDR2 image, and the like, for example.

### (Step S102)

Next, in step S102, the control unit 303 detects the image type information input from the user input unit 302.

That is, the control unit 303 detects which type of image, HDR1, HDR2, or SDR, is included in the record data.

For reference, as described above, the image type information may be acquired from metadata or through analysis of the input image data.

### (Step S103)

Next, in step S103, the image, sound, and subtitle data in the record data is subjected to a multiplexing process (transport stream (TS) generation process).

This step is performed by the multiplex processing unit 305 illustrated in Fig. 26.

The multiplexer (MUX) 314 in the multiplex processing unit 305 inputs the data of subtitles, images, and sounds acquired by the subtitle data acquisition unit 311, the image data acquisition unit 312, and the sound data acquisition unit 313 to generate a transport stream file (TS file) storing these data. Specifically, for example, the TS file is the clip AV stream file described above with reference to Fig. 3 and others.

### (Step S104)

In step S104, the control unit 303 determines whether the multiplex process has been completed on all the record data. In a case where there is data yet to be processed, the control unit 303 repeats step S101 and subsequent steps.

When determining that the multiplex process has been completed on all the record data, the control unit 303 proceeds to step S105.

### (Step S105)

Next, in step S105, the control unit 303 generates a clip information file corresponding to the generated transport stream (TS), and records the HDR identification information and the like in the clip information file.

Specifically, the control unit 303 generates, for example, the clip information file recording the HDR identification information and the like described above with reference to Figs. 17 to 19.

### (Step S106)

In step S106, the control unit 303 determines whether the generation process of all the clip information files has completed. In a case where the generation process has not yet completed, the control unit 303 repeats step S105.

When determining that the generation process of all the clip information files has completed, the control unit 303 proceeds to step S107.

### (Step S107)

Next, in step S107, the control unit 303 generates a playlist file as reproduction control information file for the generated transport stream (TS), and records the HDR identification information and the like in the playlist file.

Specifically, the control unit 303 generates, for example, the playlist file recording the HDR identification information and the like described above with reference to Figs. 10 to 16.

### (Step S108)

Next, in step S108, the control unit 303 determines whether the generation process of all the playlist files has completed. In a case where the generation process has not yet completed, the control unit 303 repeats step S107.

When determining that the generation process of all the playlist files has completed, the control unit 303 proceeds to step S109.

### (Step S109)

Next, in step S109, the control unit 303 refers to the HDR identification information recorded in the generated playlist files to generate HDR identification information compatible with all the record data in the information recording medium, and generates an index file recording the generated HDR identification information.

Specifically, the control unit 303 generates, for example, the index file recording the HDR identification information and the like described above with reference to Figs. 6 to 9.

### (Step S110)

Next, in step S110, the control unit 303 records the generated database files such as index files, playlist files, and clip information files, and the TS file (clip AV stream file) into the information recording medium.

As described above with reference to Fig. 26, under control of the control unit 303, the recording unit 306 outputs the files via the drive 307 to the information recording medium 320 and records the same in the information recording medium 320.

The foregoing series of processes complete the information recording medium with the database files such as index file, playlist files, and clip information files recording the HDR identification information and the like and the TS file (clip AV stream file) storing any of an SDR image, an HDR1 image, an HDR2 image, or the like.

### [5. Configuration and processing of an information processing device that reproduces data from an information recording medium]

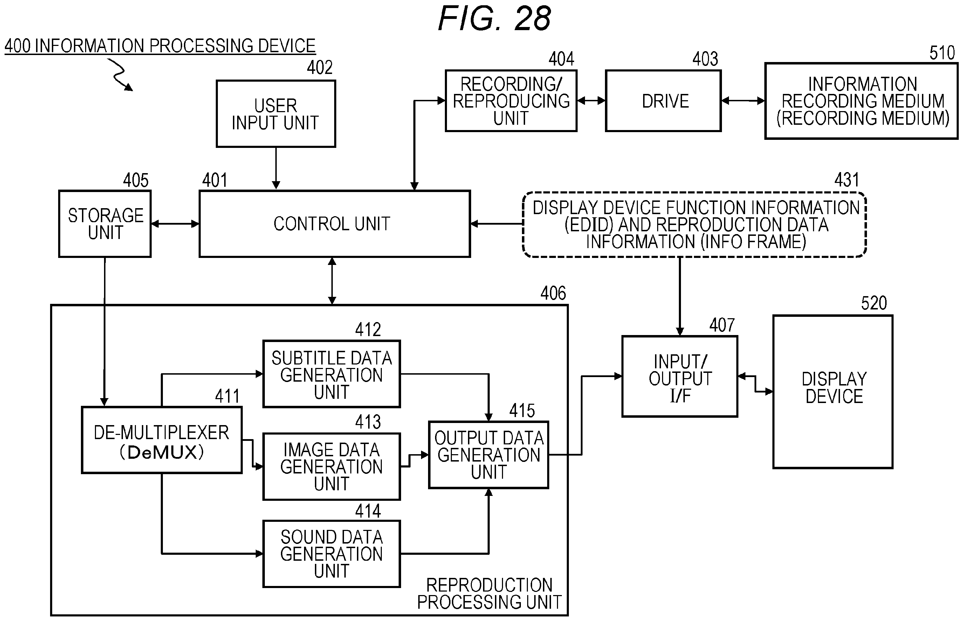

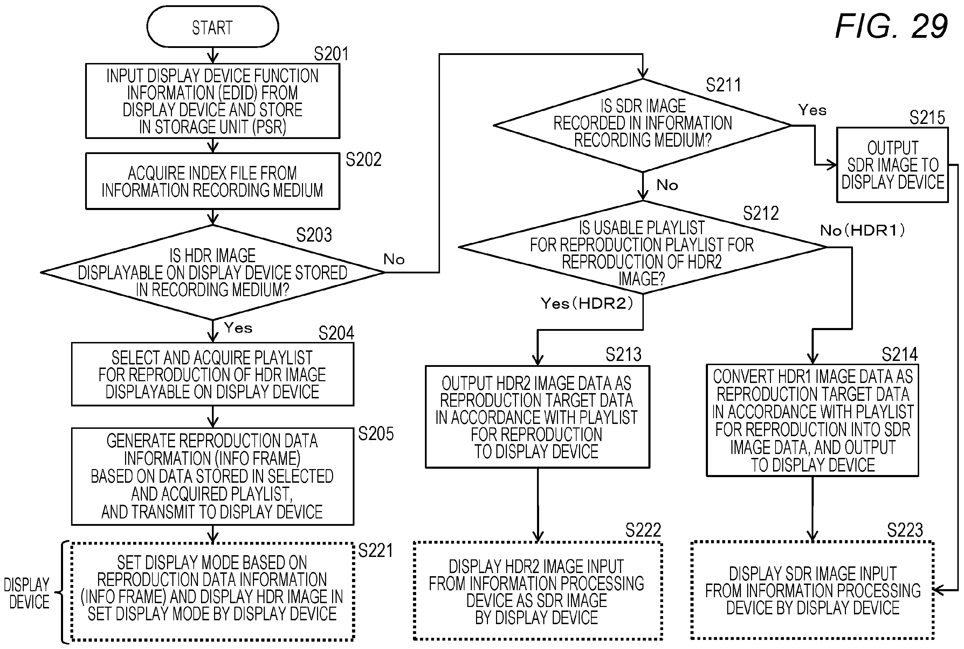

Next, a configuration and processing of an information processing device that reproduces data from an information recording medium will be described with reference to Figs. 28 and 29.

As described above with reference to Fig. 2, to implement normal display of an image on the display device 30 illustrated in Fig. 2, the reproduction device 20, for example, needs to ascertain the type of the image data recorded in the inserted information recording medium (BD) 10, that is, which type of image data, HDR1, HDR2, or SDR, is recorded, and acquire the display function information of the display device.

The reproduction device 20 of the present disclosure ascertains the type of the image data recorded in the inserted information recording medium (BD) 10, that is, which type of image data, HDR1, HDR2, or SDR, is recorded, on the basis of the HDR identification information and the like recorded in the database files such as index file, playlist files, and clip information files.

Further, as described above with reference to Fig. 20, the reproduction device 20 inputs the display device function information such as EDID from the display device 30, and outputs the reproduction data information such as an info frame to the display device 30.

Performing these processes implements normal display of an image on the display device 30.

Hereinafter, descriptions will be given to a configuration of an information processing device as an information recording medium reproduction device that implements a process of normal image display and a process sequence.

Fig. 28 is a diagram illustrating a configuration of an information processing device 400 that performs a reproduction process of data recorded in an information recording medium such as BD.

The information processing device 400 reads data from an information recording medium (recording medium) 510 illustrated in Fig. 28 and outputs the same to a display device 520. Note that a display device 20 is a display device including a display, a speaker, and the like such as a TV, for example.

The information recording medium (recording medium) 510 is a disc recording data in the BD format, for example. Besides the clip AV stream file (= transport stream file) as multiplexed data of images, sounds, and subtitles, the information recording medium 510 records, for example, database files such as index file, playlist file, and clip information file.

The clip AV stream file stores image data formed by at least an image of any type of SDR, HDR1, and HDR2. In addition, each of the index file, the playlist file, and the clip information file records the HDR identification information described above.

A control unit 401 reads record data from the information recording medium 510 via a recording/reproducing unit 404 and a drive 403, stores the same in a storage unit 405 as a data buffer, and outputs the stored data to a reproduction processing unit 406, for example, on the basis of an input of reproduction instructive information from a user input unit 402.

In addition, the control unit 401 communicates with the display device 520 via an input/output interface 407.

The control unit 401 in the information processing device 400 receives the display device function information such as EDID described above with reference to Figs. 20 to 24 from the display device 520, for example.

The control unit 401 also analyzes the HDR identification information recorded in the database files such as index file, playlist file, and clip information file read from the information recording medium 510, and stores the reproduction data information necessary for a display process of reproduction data on the display device 520 in an info frame, and transmits the same to the display device 520.

Under control of the control unit 401, the reproduction processing unit 406 acquires the reproduction data read from the information recording medium 510, that is, the data of images, sounds, subtitles, and others from the clip AV stream file and generates reproduction data.

A de-multiplexer (DeMUX) 411 acquires data storing packets constituting the clip AV stream file storing the data of images, sounds, subtitles, and others classifies the same into packets by data type, and outputs the packets to a subtitle data generation unit 412, an image data generation unit 413, and a sound data generation unit 414 according to the data type.

The subtitle data generation unit 412, the image data generation unit 413, and the sound data generation unit 414 perform a decoding process and others of the data stored in the packets and outputs the decoded data to an output data generation unit 415.

The output data generation unit 415 outputs the data of subtitles, images, and sounds to the display device 520 via the input/output interface 407.

For reference, the output data generation unit 415 performs image conversion as necessary, for example, conversion of an HDR1 image into an SDR image under control of the control unit 401.

Specifically, in a case where the display device 520 is an SDR TV, the display device 520 cannot display an HDR1 image when outputting the HDR1 image.

In such a case, the output data generation unit 415 performs a process of converting an HDR1 image into an SDR image and outputs the generated SDR image data to the display device 520.

The display device 520 subjects the data of subtitles, images, sounds, and the like input from the information processing device 400 to an output data generation process according to the characteristics and functions of the display device 520. For example, the display device 520 performs EOTF transfer and the like for generating an output value of an image to generate output data suited to the characteristics of the display device 520, and outputs the same.

Note that the control unit 401 in the information processing device 400 controls the reproduction data generated by the reproduction processing unit 406 according to the display device function information received from the display device 520.

Further, in a case where it is found from the display device function information received from the display device 520 that the data in the information recording medium 510 cannot be reproduced or displayed, for example, the control unit 401 stops the process without generating reproduction data. For reference, in this case, the control unit 401 in the information processing device 400 may be configured to output a message notifying that the reproduction data cannot be reproduced to the display device 520.

Next, a sequence of reproduction process of data from the information recording medium 510 performed by the information processing device 400 illustrated in Fig. 28 will be described with reference to Fig. 29.

The process according to the flow described in Fig. 29 can be performed according to the program stored in the storage unit of the information processing device 400, for example, under control of a data processing unit (control unit) including a CPU with a program execution function.

The steps described in the flow of Fig. 29 will be described below in sequence.

### (Step S201)

First, in step S201, the information processing device 400 inputs the display device function information (EDID) from the display device 520 and stores the same in the storage unit (PSR).

This step is described above with reference to Figs. 20 to 23. When a communication connection between the information processing device (reproduction device) 400 and the display device 520 is established, the display device 520 outputs the function information of the display device 520 and the like to the information processing device 400. Specifically, as illustrated in Fig. 20, the display device 30 outputs extended display identification data (EDID) 201 prescribed by HDMI (registered trademark), for example. The EDID includes display device function information indicating the type of image that can be output by the display device 520 and the like.

The display device function information includes information indicating which of reproduction functions of HDR1 image, HDR2 image, and SDR image the display device 520 has, for example, as described above with reference to Fig. 22.

The information processing device 400 stores the reproduction function information received from the display device 520 in the storage unit (PSR). For example, the information processing device 400 stores the information in the storage unit (PSR) as described above with reference to Fig. 23, for example.

### (Step S202)

Next, in step S202, the information processing device 400 acquires the index file from the information recording medium.

The index file records the HDR identification information described above with reference to Figs. 6 to 9, for example.

### (Step S203)

Next, in step S203, the information processing device 400 determines whether an HDR image displayable on the display device 520 is recorded in the information recording medium 510, on the basis of the HDR identification information recorded in the index file read from the information recording medium 510 and the display device function information (EDID) received from the display device 520 in preceding step S201.

In a case of determining that an HDR image displayable on the display device 520 is recorded in the information recording medium 510, the information processing device 400 proceeds to step S204. In a case of not determining that an HDR image displayable on the display device 520 is recorded in the information recording medium 510, the information processing device 400 proceeds to step S211.

### (Step S204)

In a case of determining in step S203 that an HDR image displayable on the display device 520 is recorded in the information recording medium 510, the information processing device 400 proceeds to step S204.

In step S204, the information processing device 400 selects and acquires the playlist for reproduction of the HDR image displayable on the display device.

The HDR image displayable on the display device is an HDR1 image or an HDR2 image, for example. Which of them is displayable on the display device 520 is already ascertained in step S201 by the display device function information received from the display device 520.

The information processing device 400 selects and acquires the playlist as the reproduction control information for the stream file storing the HDR image displayable on the display device 520.

### (Step S205)

Next, in step S205, the information processing device 400 generates reproduction data information (info frame) on the basis of the data stored in the selected and acquired playlist and transmits the same to the display device 520.

The reproduction data information (info frame) is the reproduction data information (info frame) described above with reference to Figs. 20, 24, and 25.

As illustrated in Fig. 24, the info frame has a plurality of fields. Various types of information recorded by field is provided by the information processing device (reproduction device) 400 to the display device 520. The information is reproduction data information to be applied to a display process of the reproduction contents input from the information processing device (reproduction device) 400 and the like, by the display device 520. For example, electro-optic transfer function (EOTF) information to be applied to the image display process is recorded.

### (Step S221)

The steps indicated by dotted lines in Fig. 29 (steps S221 to S223) are carried out by the display device 520.

In step S221, the display device 520 sets the display mode on the basis of the reproduction data information (info frame) received from the information processing device 400 and displays the HDR image in the set display mode.

### (Step S211)

Next, descriptions will be given as to step S211 and subsequent steps to be performed in a case where it is not determined in step S203 that an HDR image displayable on the display device 520 is recorded in the information recording medium 510.

In step S211, the information processing device 400 determines whether an SDR image is recorded in the information recording medium 510.

The determination is based on the HDR identification information in the index file read from the information recording medium 510 in step S202.

In a case of not determining that an SDR image is recorded in the information recording medium 510, the information processing device 400 proceeds to step S212.

On the other hand, in a case of determining that an SDR image is recorded in the information recording medium 510, the information processing device 400 proceeds to step S215.

### (Step S212)

In a case of not determining in step S211 that an SDR image is recorded in the information recording medium 510, the information processing device 400 proceeds to step S212.

In step S212, the information processing device 400 determines whether the playlist for use in image reproduction is a playlist for reproduction of the HDR2 image.

The determination is based on the HDR identification information and the like recorded in the playlist file described above with reference to Figs. 10 to 16.

In a case of determining that the playlist for reproduction is a playlist for reproduction of the HDR2 image, the information processing device 400 proceeds to step S213.

On the other hand, in a case of not determining that the playlist for reproduction is a playlist for reproduction of the HDR2 image, the information processing device 400 proceeds to step S214. In this case, the playlist for reproduction is a playlist for reproduction of the HDR1 image.

### (Step S213)

In a case of determining in step S212 that the playlist for reproduction is a playlist for reproduction of the HDR2 image, the information processing device 400 proceeds to step S213.

In step S213, the information processing device 400 outputs the HDR2 image data as reproduction target data in accordance with the playlist for reproduction directly to the display device 520.

For reference, as described above with reference to Fig. 2, the HDR2 image is generated as image data capable of being output to even the HDR-incompatible TV (SDR TV) 30a.

HDR2 images correspond to the relative value scheme (b) Application 2 as described above. According to the HDR2 image scheme, HDR TVs compatible with HDR image output with high upper limits of output luminance can output HDR images with wide dynamic ranges, and conventional SDR TVs can also display HDR images naturally within luminance ranges that can be output by the SDR TVs.

That is, HDR2 images can be displayed as HDR2 images on HDR2-compatible TVs and can also be displayed as SDR images on SDR TVs.

Since the negative determination is made in step S203, the display device is an SDR TV or the like that is not capable of outputting the HDR2 image. However, the HDR2 image can be displayed as an SDR image on the SDR TV, and thus the information processing device 400 outputs the HDR2 image data directly to the display device 520.

### (Step S222)

Step S222 is carried out by the display device 520.

In step S222, the display device 520 displays the HDR2 image input from the information processing device 400 as an SDR image.

### (Step S214)

In a case of not determining in step S212 that the playlist for reproduction is a playlist for reproduction of the HDR2 image, the display device 520 proceeds to step S214.

That is, step S214 is carried out in a case where the playlist for reproduction is a playlist for reproduction of the HDR1 image.

As described above with reference to Fig. 2 and others, the HDR1 image is not displayable on the SDR display device.

In this case, in step S214, the information processing device 400 converts the HDR1 image data as reproduction target data in accordance with the playlist for reproduction into SDR image data, and outputs the same to the display device 520.

### (Step S223)

Step S223 is carried out by the display device 520.

In step S223, the display device 520 displays the SDR image input from the information processing device 400.

### (Step S215)

In a case of determining in step S211 that the SDR image is recorded in the information recording medium 510, the information processing device 400 proceeds to step S215.

In step S215, the information processing device 400 outputs the SDR image data to the display device.

### (Step S223)

Even after step S215, the display device 520 performs step S223.

In step S223, the display device 520 displays the SDR image input from the information processing device 400.

For reference, this flowchart is based on the assumption that the information processing device 400 has a function of converting an HDR1 image into an SDR image. However, in a case where the information processing device 400 has no function of data conversion, the information processing device 400 may be configured to output a message notifying that there is no data displayable on the display device 520.

### [6. Example of configuration of an information processing device]

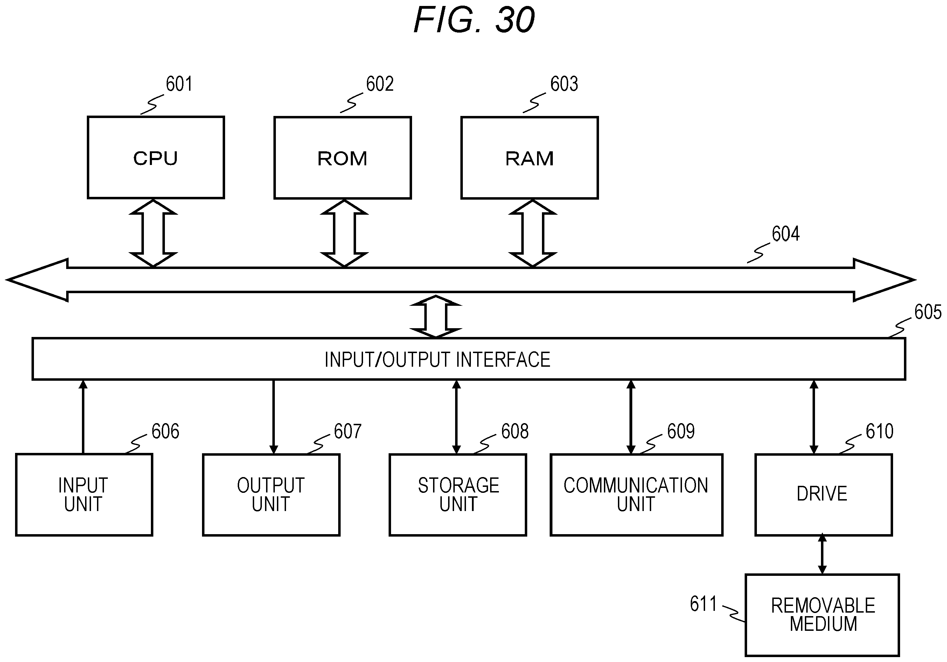

Next, descriptions will be given as to a hardware configuration of an information processing device that records data into an information recording medium and reproduces data from an information recording medium, a display device that displays reproduction data from an information recording medium, or an information processing device applicable as an information recording medium manufacturing device, with reference to Fig. 30.

A central processing unit (CPU) 601 serves as a data processing unit that performs various processes according to programs stored in a read only memory (ROM) 602 or a storage unit 608. For example, the CPU 601 performs the processes in accordance with the sequences in the example described above. A random access memory (RAM) 603 stores the programs data, and the like to be executed by the CPU 601. The CPU 601, the ROM 602, and the RAM 603 are connected to one another via a bus 604.

The CPU 601 is connected to an input/output interface 605 via the bus 604. The input/output interface 605 is connected to an input unit 606 including various switches, keyboard, mouse, microphone, and others and an output unit 607 including a display, speaker, and others. The CPU 601 performs various processes in response to commands input from the input unit 606, and outputs the processing results to the output unit 607, for example.

The storage unit 608 connected to the input/output interface 605 includes a hard disc or the like, for example, that stores the programs and various data to be executed by the CPU 601. A communication unit 609 serves as a transmission/reception unit of data communications via networks such as the internet and local area networks and as a transmission/reception unit of broadcast waves to communicate with external devices.

A drive 610 connected to the input/output interface 605 drives a removable medium 611 such as a magnetic disc, optical disc, magneto-optical disc, or a semiconductor memory such as a memory card to record or read data.

### [7. Summary of configuration of the present disclosure]

Examples of the present disclosure have been described in detail so far with reference to specific examples. However, it is obvious that persons in the skilled art can modify the examples or replace the examples with other ones without deviating from the gist of the present disclosure. That is, the present invention has been disclosed so far in the form of exemplification and should not be interpreted in a limited way. The gist of the present disclosure should be judged in consideration of the claims.

Note that the technology disclosed herein can be configured as follows:
(1) An information processing device including a data processing unit configured to reproduce data recorded in an information recording medium, in which
   the data processing unit inputs display device information including high dynamic range (HDR) image display function information from a display device configured to display reproduction data from the information recording medium,
   the data processing unit acquires HDR identification information indicating whether image data recorded in the information recording medium includes an HDR image from a database file recorded in the information recording medium, and
   the data processing unit reads image data displayable on the display device from the information recording medium on the basis of results of comparison between the display device information and the HDR identification information, and outputs the image data to the display device.
(2) The information processing device according to (1), in which
   the display device information includes information regarding whether the display device has a function of displaying each of an HDR1 image, an HDR2 image, and a standard dynamic range (SDR) image different in image type,
   the HDR identification information includes information indicating which type of image data among the HDR1 image, the HDR2 image, and the SDR image is recorded in the information recording medium, and
   the data processing unit outputs the HDR image or the SDR image displayable on the display device, on the basis of results of comparison between the display device information and the HDR identification information.
(3) The information processing device according to (2), in which
   the HDR2 image is image data that is displayable as a pseudo SDR image on a display device where only the SDR image is displayable, and
   in a case where it is ascertained on the basis of the display device information that the display device is capable of displaying only the SDR image and it is ascertained on the basis of the HDR identification information that the image recorded in the information recording medium is the SDR image or the HDR2 image, the data processing unit outputs the SDR image or the HDR2 image recorded in the information recording medium to the display device.
(4) The information processing device according to (2), in which
   the HDR1 image is an image data that is incapable of being normally displayed on a display device where only the SDR image is displayable, and
   in a case where it is ascertained on the basis of the display device information that the display device is capable of displaying only the SDR image and it is ascertained on the basis of the HDR identification information that the image recorded in the information recording medium is the HDR1 image, the data processing unit converts the HDR1 image read from the information recording medium into the SDR image and outputs the image to the display device.
(5) The information processing device according to any one of (1) to (4), in which the database file is an index file, a playlist file, or a clip information file prescribed in a Blu-ray (registered trademark) disc format.
(6) The information processing device according to any one of (1) to (5), in which
   the data processing unit is configured to transmit reproduction data information to be applied to a display process of the image data recorded in the information recording medium to the display device, and
   the reproduction data information includes signal transfer function identification information to be applied to the display process of the image data.
(7) An information processing device including a data processing unit configured to record data into an information recording medium, in which
   the data processing unit generates a database file that stores HDR identification information indicating which of HDR images different in image type, among a high dynamic range (HDR) 1 image, an HDR 2 image, and a standard dynamic range (SDR) image is included as the image data recorded in the information recording medium, and records the database file in the information recording medium.
(8) The information processing device according to (7), in which the database file is an index file, a playlist file, or a clip information file prescribed in a Blu-ray (registered trademark) disc format.
(9) The information processing device according to (8), in which
   the data processing unit records into the index file, HDR identification information regarding entire data recorded in the information recording medium,
   the data processing unit records into the playlist file, HDR identification information by reproduction target data in accordance with the playlist file, and
   the data processing unit records into the clip information file, HDR identification information by reproduction data associated with the clip information file.
(10) An information recording medium including as record data:
   a reproduction data file storing image data; and
   a database file that stores HDR identification information indicating which of HDR images different in image type, among a high dynamic range (HDR) 1 image, an HDR 2 image, and a standard dynamic range (SDR) image is included as the image data stored in the reproduction data file, in which
   a reproduction device is allowed to refer to the HDR identification information to select and reproduce the image data of the type suited to a display function of a display device configured to display reproduction data.
(11) The information recording medium according to (10) in which the database file is an index file, a playlist file, or a clip information file prescribed in a Blu-ray (registered trademark) disc format.
(12) The information recording medium according to (11) in which
   the index file stores HDR identification information regarding entire data recorded in the information recording medium,
   the playlist file stores HDR identification information by reproduction target data in accordance with the playlist file, and
   the clip information file stores HDR identification information by reproduction data associated with the clip information file.
(13) A display device including:
   a communication unit configured to transmit and receive data to and from a reproduction device configured to reproduce data recorded in an information recording medium; and
   a data processing unit, in which
   the data processing unit generates display device information including high dynamic range (HDR) image display function information, and outputs the display device information to the reproduction device.
(14) The display device according to (13), in which the display device information includes information regarding whether the display device has a function of displaying each of an HDR1 image, an HDR2 image, and a standard dynamic range (SDR) image different in image type.
(15) An information processing method executed in an information processing device, in which
   the information processing device includes a data processing unit configured to reproduce data recorded in an information recording medium,
   the data processing unit inputs display device information including high dynamic range (HDR) image display function information from a display device configured to display reproduction data from the information recording medium,
   the data processing unit acquires HDR identification information indicating whether image data recorded in the information recording medium includes an HDR image from a database file recorded in the information recording medium, and
   the data processing unit reads image data displayable on the display device from the information recording medium on the basis of results of comparison between the display device information and the HDR identification information, and outputs the image data to the display device.
(16) An information processing method executed in an information processing device, in which
   the information processing device includes a data processing unit configured to record data into an information recording medium, and
   the data processing unit generates a database file that stores HDR identification information indicating which of HDR images different in image type, among a high dynamic range (HDR) 1 image, an HDR 2 image, and a standard dynamic range (SDR) image is included as the image data recorded in the information recording medium, and records the database file in the information recording medium.
(17) An information processing method executed in a display device, in which
   the display device includes:
   a communication unit configured to transmit and receive data to and from a reproduction device configured to reproduce data recorded in an information recording medium; and
   a data processing unit, and
   the data processing unit generates display device information including high dynamic range (HDR) image display function information, and outputs the display device information to the reproduction device.
(18) A program for causing an information processing device to perform information processing, in which
   the information processing device includes a data processing unit configured to reproduce data recorded in an information recording medium, and
   the program causes the data processing unit to perform:
   inputting display device information including high dynamic range (HDR) image display function information from a display device configured to display reproduction data from the information recording medium;
   acquiring HDR identification information indicating whether image data recorded in the information recording medium includes an HDR image from a database file recorded in the information recording medium; and
   reading image data displayable on the display device from the information recording medium on the basis of results of comparison between the display device information and the HDR identification information, and outputting the image data to the display device.
(19) A program for causing an information processing device to perform information processing, in which
   the information processing device includes a data processing unit configured to record data into an information recording medium, and
   the program causes the data processing unit to generate a database file that stores HDR identification information indicating which of HDR images different in image type, among a high dynamic range (HDR) 1 image, an HDR 2 image, and a standard dynamic range (SDR) image is included as the image data recorded in the information recording medium, and recording the database file in the information recording medium.
(20) A program for causing a display device to perform information processing, in which
   the display device includes:
   a communication unit configured to transmit and receive data to and from a reproduction device configured to reproduce data recorded in an information recording medium; and
   a data processing unit, and
   the program causes the data processing unit to generate display device information including high dynamic range (HDR) image display function information, and output the display device information to the reproduction device.

In addition, the series of processes described herein can be implemented by hardware, software, or a complex configuration of hardware and software. To implement the processes by software, a program describing a process sequence may be installed into a memory in a computer incorporated into dedicated hardware or may be installed into a general-purpose computer capable of executing various processes. For example, the program may be recorded in advance in a recording medium. Besides installing the program from a recording medium into a computer, the program may be received via a network such as a local area network (LAN) or the internet and installed in a recording medium such as a built-in hard disc.

Note that the various processes described herein may be executed in time-series manner according to the description or may be executed in parallel or individually according to processing performance of the device executing the processes or as necessary. In addition, the system herein refers to a logical aggregate configuration of a plurality of devices, and the individually configured devices may not be in the same housing.

### INDUSTRIAL APPLICABILITY

As described above, according to the configuration of one example of the present disclosure, it is possible to achieve a configuration for acquiring a displayable image from an information recording medium according to the type of the image stored in the information recording medium and display function information of a display device and outputting the same to the display device.

Specifically, a data processing unit configured to reproduce data from an information recording medium inputs display function information for each of the HDR 1, HDR 2, and SDR images from a display device configured to display reproduction data, acquires HDR identification information indicating whether image data recorded in the information recording medium includes each of the HDR 1, HDR 2, and SDR images from a database file recorded in the information recording medium, and reads image data displayable on the display device from the information recording medium on the basis of results of comparison between the acquired display device function information and the HDR identification information, and outputs the same to the display device.

According to this configuration, it is possible to acquire the displayable image from the recording medium according to the type of the image stored in the information recording medium and the display function information regarding the display device, and outputs the same to the display device.

### REFERENCE SIGNS LIST

- 10: Information recording medium (disc)
- 20: Reproduction device
- 30: Display device
- 51: Management information setting unit
- 52: Data unit
- 300: Information processing device
- 301: Data input unit
- 302: User input unit
- 303: Control unit
- 304: Storage unit
- 305: Multiplication processing unit
- 306: Recording unit
- 307: Drive
- 308: Information recording medium
- 311: Subtitle data acquisition unit
- 312: Image data acquisition unit
- 313: Sound data acquisition unit
- 314: Multiplexer
- 400: Information processing device
- 401: Control unit
- 402: User input unit
- 403: Drive
- 404: Recording/reproducing unit
- 405: Storage unit
- 406: Reproduction processing unit
- 407: Input/output I/F
- 411: De-multiplexer
- 412: Subtitle data generation unit
- 413: Image data generation unit
- 414: Sound data generation unit
- 415: Output data generation unit
- 510: Information recording medium
- 520: Display device
- 601: CPU
- 602: ROM
- 603: RAM
- 604: Bus
- 605: Input/output interface
- 606: Input unit
- 607: Output unit
- 608: Storage unit
- 609: Communication unit
- 610: Drive
- 611: Removable medium

## Claims

1. An information processing device comprising a data processing unit configured to reproduce data recorded in an information recording medium, wherein
the data processing unit inputs display device information including high dynamic range (HDR) image display function information from a display device configured to display reproduction data from the information recording medium,
the data processing unit acquires HDR identification information indicating whether image data recorded in the information recording medium includes an HDR image from a database file recorded in the information recording medium, and
the data processing unit reads image data displayable on the display device from the information recording medium on the basis of results of comparison between the display device information and the HDR identification information, and outputs the image data to the display device.

2. The information processing device according to claim 1, wherein
the display device information includes information regarding whether the display device has a function of displaying each of an HDR1 image, an HDR2 image, and a standard dynamic range (SDR) image different in image type,
the HDR identification information includes information indicating which type of image data among the HDR1 image, the HDR2 image, and the SDR image is recorded in the information recording medium, and
the data processing unit outputs the HDR image or the SDR image displayable on the display device, on the basis of results of comparison between the display device information and the HDR identification information.

3. The information processing device according to claim 2, wherein
the HDR2 image is image data that is displayable as a pseudo SDR image on a display device where only the SDR image is displayable, and
in a case where it is ascertained on the basis of the display device information that the display device is capable of displaying only the SDR image and it is ascertained on the basis of the HDR identification information that the image recorded in the information recording medium is the SDR image or the HDR2 image, the data processing unit outputs the SDR image or the HDR2 image recorded in the information recording medium to the display device.

4. The information processing device according to claim 2, wherein
the HDR1 image is an image data that is incapable of being normally displayed on a display device where only the SDR image is displayable, and
in a case where it is ascertained on the basis of the display device information that the display device is capable of displaying only the SDR image and it is ascertained on the basis of the HDR identification information that the image recorded in the information recording medium is the HDR1 image, the data processing unit converts the HDR1 image read from the information recording medium into the SDR image and outputs the image to the display device.

5. The information processing device according to claim 1, wherein the database file is an index file, a playlist file, or a clip information file prescribed in a Blu-ray (registered trademark) disc format.

6. The information processing device according to claim 1, wherein
the data processing unit is configured to transmit reproduction data information to be applied to a display process of the image data recorded in the information recording medium to the display device, and
the reproduction data information includes signal transfer function identification information to be applied to the display process of the image data.

7. An information processing device comprising a data processing unit configured to record data into an information recording medium, wherein
the data processing unit generates a database file that stores HDR identification information indicating which of HDR images different in image type, among a high dynamic range (HDR) 1 image, an HDR 2 image, and a standard dynamic range (SDR) image is included as the image data recorded in the information recording medium, and records the database file in the information recording medium.

8. The information processing device according to claim 7, wherein the database file is an index file, a playlist file, or a clip information file prescribed in a Blu-ray (registered trademark) disc format.

9. The information processing device according to claim 8, wherein
the data processing unit records into the index file, HDR identification information regarding entire data recorded in the information recording medium,
the data processing unit records into the playlist file, HDR identification information by reproduction target data in accordance with the playlist file, and
the data processing unit records into the clip information file, HDR identification information by reproduction data associated with the clip information file.

10. An information recording medium comprising as record data:
a reproduction data file storing image data; and
a database file that stores HDR identification information indicating which of HDR images different in image type, among a high dynamic range (HDR) 1 image, an HDR 2 image, and a standard dynamic range (SDR) image is included as the image data stored in the reproduction data file, wherein
a reproduction device is allowed to refer to the HDR identification information to select and reproduce the image data of the type suited to a display function of a display device configured to display reproduction data.

11. The information recording medium according to claim 10, wherein the database file is an index file, a playlist file, or a clip information file prescribed in a Blu-ray (registered trademark) disc format.

12. The information recording medium according to claim 11 wherein
the index file stores HDR identification information regarding entire data recorded in the information recording medium,
the playlist file stores HDR identification information by reproduction target data in accordance with the playlist file, and
the clip information file stores HDR identification information by reproduction data associated with the clip information file.

13. A display device comprising:
a communication unit configured to transmit and receive data to and from a reproduction device configured to reproduce data recorded in an information recording medium; and
a data processing unit, wherein
the data processing unit generates display device information including high dynamic range (HDR) image display function information, and outputs the display device information to the reproduction device.

14. The display device according to claim 13, wherein the display device information includes information regarding whether the display device has a function of displaying each of an HDR1 image, an HDR2 image, and a standard dynamic range (SDR) image different in image type.

15. An information processing method executed in an information processing device, wherein
the information processing device includes a data processing unit configured to reproduce data recorded in an information recording medium,
the data processing unit inputs display device information including high dynamic range (HDR) image display function information from a display device configured to display reproduction data from the information recording medium,
the data processing unit acquires HDR identification information indicating whether image data recorded in the information recording medium includes an HDR image from a database file recorded in the information recording medium, and
the data processing unit reads image data displayable on the display device from the information recording medium on the basis of results of comparison between the display device information and the HDR identification information, and outputs the image data to the display device.

16. An information processing method executed in an information processing device, wherein
the information processing device includes a data processing unit configured to record data into an information recording medium, and
the data processing unit generates a database file that stores HDR identification information indicating which of HDR images different in image type, among a high dynamic range (HDR) 1 image, an HDR 2 image, and a standard dynamic range (SDR) image is included as the image data recorded in the information recording medium, and records the database file in the information recording medium.

17. An information processing method executed in a display device, wherein
the display device includes:
a communication unit configured to transmit and receive data to and from a reproduction device configured to reproduce data recorded in an information recording medium; and
a data processing unit, and
the data processing unit generates display device information including high dynamic range (HDR) image display function information, and outputs the display device information to the reproduction device.

18. A program for causing an information processing device to perform information processing, wherein
the information processing device includes a data processing unit configured to reproduce data recorded in an information recording medium, and
the program causes the data processing unit to perform:
inputting display device information including high dynamic range (HDR) image display function information from a display device configured to display reproduction data from the information recording medium;
acquiring HDR identification information indicating whether image data recorded in the information recording medium includes an HDR image from a database file recorded in the information recording medium; and
reading image data displayable on the display device from the information recording medium on the basis of results of comparison between the display device information and the HDR identification information, and outputting the image data to the display device.

19. A program for causing an information processing device to perform information processing, wherein
the information processing device includes a data processing unit configured to record data into an information recording medium, and
the program causes the data processing unit to generate a database file that stores HDR identification information indicating which of HDR images different in image type, among a high dynamic range (HDR) 1 image, an HDR 2 image, and a standard dynamic range (SDR) image is included as the image data recorded in the information recording medium, and record the database file in the information recording medium.

20. A program for causing a display device to perform information processing, wherein
the display device includes:
a communication unit configured to transmit and receive data to and from a reproduction device configured to reproduce data recorded in an information recording medium; and
a data processing unit, and
the program causes the data processing unit to generate display device information including high dynamic range (HDR) image display function information, and output the display device information to the reproduction device.
